# EUROPEAN PATENT APPLICATION

(11) **EP 4 518 333 A1**
(43) Date of publication of application: **05.03.2025**
(21) Application number: 24712398.7
(22) Date of filing: 22.03.2024
(51) Int. Cl.: H04N 21/466, H04N 21/45, H04N 21/442, H04N 21/482

(54) **ELECTRONIC DEVICE AND CONTROL METHOD THEREOF**

(30) Priority: 04.07.2023 KR 20230086706
(71) Applicant: Samsung Electronics Co., Ltd., Suwon-si, Gyeonggi-do 16677 (KR)
(72) Inventor: CHUN, Hyunwoo, Suwon-si, Gyeonggi-do 16677 (KR); KOH, Kwanghyun, Suwon-si, Gyeonggi-do 16677 (KR); PARK, Sanghun, Suwon-si, Gyeonggi-do 16677 (KR); JOE, Seongmin, Suwon-si, Gyeonggi-do 16677 (KR); KIM, Wonkyun, Suwon-si, Gyeonggi-do 16677 (KR); BAE, Sehyun, Suwon-si, Gyeonggi-do 16677 (KR); YEOM, Hyesu, Suwon-si, Gyeonggi-do 16677 (KR); JEONG, Arang, Suwon-si, Gyeonggi-do 16677 (KR)
(74) Representative: Walaski, Jan Filip
(86) International application number: PCT/KR2024/003591
(87) International publication number: WO 2025/009692

(57) **Abstract**

The disclosure relates to an artificial intelligence (AI) system that utilizes a machine learning algorithm and an application thereof. The electronic apparatus includes a memory storing a pre-set pattern and a recommended content, and at least one processor, and the at least one processor is configured to obtain first context information which includes a plurality of user inputs, obtain, based on the pre-set pattern being identified according to the first context information, a predetermined event based on an identification result of the pre-set pattern, obtain second context information which includes a plurality of user inputs, and provide, based on the predetermined event being identified according to the second context information, the recommended content.

## Description

### [Technical Field]

The disclosure relates to an electronic apparatus and a controlling method thereof, and more particularly to an electronic apparatus which determines a time-point to provide recommended content using context information and a controlling method thereof.

### [Background Art]

An electronic apparatus may provide recommended content while a user is watching television (TV). The recommended content may include content corresponding to a user preference. The recommended content may include applications, channels, advertisements, games, and the like.

If a predetermined condition is satisfied, a recommended function may be executed. However, satisfaction or aversion by the user may vary with respect to the recommended function according to a content recommended time-point which is provided to the user. If a time-point to execute the recommended function is determined simply based on a recommended function feedback of the user, user satisfaction may not be high.

Even if the recommended time-point is determined by using a user history, aversion to the recommended function may be great if content intended to be viewed currently by the user is clear. Conversely, aversion to the recommended function may be low if content intended to be viewed currently by the user is unclear.

An artificial intelligence system for determining a recommended content time-point may be used.

The artificial intelligence system, as a computer system that implements intelligence at a human level, may be a system that improves in recognition rate as a machine learns and determines on its own, and is used more often.

Artificial intelligence technology is configured with a machine learning (deep learning) technique which uses an algorithm for classifying/learning features of input data on its own and element techniques utilizing the machine learning algorithm to simulate functions such as recognition and determination of a human brain.

The element techniques may include, for example, at least one from among inference/prediction technique of logically inferring and predicting by determining information, and knowledge representation technique of processing human experience information to knowledge data.

### [Disclosure]

### [Technical Solution]

The disclosure is designed to address the above-described problems, and an object of the disclosure is to provide an electronic apparatus which determines a time-point to provide recommended content by identifying a pre-set pattern included in context information and a controlling method thereof.

According to an embodiment, an electronic apparatus includes a memory storing a pre-set pattern and a recommended content, and at least one processor, and the at least one processor is configured to obtain first context information which includes a plurality of user inputs, obtain, based on the pre-set pattern being identified according to the first context information, a predetermined event based on an identification result of the pre-set pattern, obtain second context information which includes a plurality of user inputs, and provide, based on the predetermined event being identified according to the second context information, the recommended content.

The pre-set pattern may include at least one from among a pattern associated with a key input of a remote control apparatus connected with the electronic apparatus, a pattern associated with a channel conversion input, a pattern associated with an application conversion input, and a pattern associated with a source conversion input connected with the electronic apparatus.

The at least one processor may be configured to identify at least one user input indicating a time-point to provide the recommended content from among the plurality of user inputs included in the first context information, and obtain the predetermined event based on the identified at least one user input.

The pre-set pattern may include a first pattern and a second pattern, and the at least one processor may be configured to obtain a first number of times that the first pattern is identified during a threshold time based on the first context information, obtain a second number of times that the second pattern is identified during the threshold time based on the first context information, and obtain the predetermined event based on the first number of times and the second number of times.

The at least one processor may be configured to obtain, based on the first number of times being greater than or equal to a first threshold value which corresponds to the first pattern, a first median value based on a pre-set value and a first weight value corresponding to the first pattern, obtain, based on the second number of times being greater than or equal to a second threshold value which corresponds to the second pattern, a second median value based on the pre-set value and a second weight value corresponding to the second pattern, obtain a sum value of having added the first median value and the second median value, and obtain, based on the sum value being greater than or equal to a third threshold value, the predetermined event based on the first context information.

The at least one processor may be configured to obtain, based on the sum value being greater than or equal to the third threshold value, feature data and label data based on the first context information, and determine a predetermined event based on the feature data and the label data.

The at least one processor may be configured to obtain, based on the second context information being obtained, a third number of times that the first pattern is identified during the threshold time based on the second context information, obtain a fourth number of times that the second pattern is identified during the threshold time based on the second context information, update the first threshold value based on the third number of times, update the second threshold value based on the fourth number of times, and update the predetermined event based on the updated first threshold value and the updated second threshold value.

The at least one processor may be configured to provide, based on the predetermined event being identified according to the second context information, a guide screen associated with the recommended content, and update, based on a user feedback being received through the guide screen, the predetermined event based on the user feedback.

The guide screen may include a user interface (UI) for deleting the predetermined event, and the at least one processor may be configured to delete, based on the user feedback being received through the UI for deleting the predetermined event, the predetermined event.

The at least one processor may be configured to generate, based on a pre-set pattern being identified according to the first context information, an artificial intelligence model for determining the predetermined event based on the identification result of the pre-set pattern, input the second context information in the artificial intelligence model, obtain a probability value indicating whether the predetermined event is identifiable as output data based on the second context information through the artificial intelligence model, and provide, based on the probability value being greater than or equal to a fourth threshold value, the recommended content.

According to an embodiment, a controlling method of an electronic apparatus storing a pre-set pattern and a recommended content includes obtaining first context information which includes a plurality of user inputs, obtaining, based on the pre-set pattern being identified according to the first context information, a predetermined event based on an identification result of the pre-set pattern, obtaining second context information which includes a plurality of user inputs, and providing, based on the predetermined event being identified according to the second context information, the recommended content.

The pre-set pattern may include at least one from among a pattern associated with a key input of a remote control apparatus connected with the electronic apparatus, a pattern associated with a channel conversion input, a pattern associated with an application conversion input, and a pattern associated with a source conversion input connected with the electronic apparatus.

The obtaining a predetermined event may include identifying at least one user input indicating a time-point to provide the recommended content from among the plurality of user inputs included in the first context information, and obtaining the predetermined event based on the identified at least one user input.

The pre-set pattern may include a first pattern and a second pattern, and the obtaining a predetermined event may include obtaining a first number of times that the first pattern is identified during a threshold time based on the first context information, obtaining a second number of times that the second pattern is identified during the threshold time based on the first context information, and obtaining the predetermined event based on the first number of times and the second number of times.

The obtaining a predetermined event may include obtaining, based on the first number of times being greater than or equal to a first threshold value which corresponds to the first pattern, a first median value based on a pre-set value and a first weight value corresponding to the first pattern, obtaining, based on the second number of times being greater than or equal to a second threshold value which corresponds to the second pattern, a second median value based on the pre-set value and a second weight value corresponding to the second pattern, obtaining a sum value of having added the first median value and the second median value, and obtaining, based on the sum value being greater than or equal to a third threshold value, the predetermined event based on the first context information.

The obtaining a predetermined event may include obtaining, based on the sum value being greater than or equal to the third threshold value, feature data and label data based on the first context information, and determining a predetermined event based on the feature data and the label data.

The controlling method may further include obtaining, based on the second context information being obtained, a third number of times that the first pattern is identified during the threshold time based on the second context information, obtaining a fourth number of times that the second pattern is identified during the threshold time based on the second context information, updating the first threshold value based on the third number of times, updating the second threshold value based on the fourth number of times, and updating the predetermined event based on the updated first threshold value and the updated second threshold value.

The controlling method may further include providing, based on the predetermined event being identified according to the second context information, a guide screen associated with the recommended content, and updating, based on a user feedback being received through the guide screen, the predetermined event based on the user feedback.

The guide screen may include a user interface (UI) for deleting the predetermined event, and the updating the predetermined event may include deleting, based on the user feedback being received through the UI for deleting the predetermined event, the predetermined event.

The controlling method may further include generating, based on a pre-set pattern being identified according to the first context information, an artificial intelligence model for determining the predetermined event based on the identification result of the pre-set pattern, inputting the second context information in the artificial intelligence model, obtaining a probability value indicating whether the predetermined event is identifiable as output data based on the second context information through the artificial intelligence model, and providing, based on the probability value being greater than or equal to a fourth threshold value, the recommended content.

### [Description of Drawings]

FIG. 1 is a diagram for illustrating an operation of providing recommended content;
FIG. 2 is a block diagram illustrating an electronic apparatus;
FIG. 3 is a block diagram illustrating a detailed configuration of the electronic apparatus of FIG. 2;
FIG. 4 is a flowchart illustrating an operation for providing recommended content based on context information;
FIG. 5 is a flowchart illustrating an identification operation of a pre-set event;
FIG. 6 is a flowchart illustrating a determining operation of a pre-set event;
FIG. 7 is a diagram illustrating a pre-set pattern;
FIG. 8 is a diagram illustrating a number of patterns and a pattern threshold value;
FIG. 9 is a diagram illustrating a number of patterns and a pattern threshold value;
FIG. 10 is a diagram illustrating an operation for calculating a sum value;
FIG. 11 is a diagram illustrating label data;
FIG. 12 is a flowchart illustrating an operation for determining a pre-set event based on a first number of times corresponding to a first pattern;
FIG. 13 is a flowchart illustrating an operation for determining a pre-set event based on a first number of times corresponding to a first pattern and a second number of times corresponding to a second pattern;
FIG. 14 is a flowchart illustrating an operation for determining a pre-set event based on feature data and label data;
FIG. 15 is a diagram illustrating an artificial intelligence model;
FIG. 16 is a diagram illustrating an artificial intelligence model;
FIG. 17 is a flowchart illustrating an operation for providing a guide screen associated with recommended content;
FIG. 18 is a diagram illustrating an operation for providing a guide screen associated with recommended content;
FIG. 19 is a flowchart illustrating an operation associated with user feedback;
FIG. 20 is a diagram illustrating an operation associated with user feedback;
FIG. 21 is a flowchart illustrating an operation between an electronic apparatus and a server;
FIG. 22 is a flowchart illustrating an operation between an electronic apparatus, a server, and a content providing server;
FIG. 23 is a flowchart illustrating an operation between an electronic apparatus and a server;
FIG. 24 is a diagram illustrating a plurality of modules used in an operation for providing recommended content;
FIG. 25 is a flowchart illustrating mapping information;
FIG. 26 is a flowchart illustrating an operation for providing recommended content; and
FIG. 27 is a flowchart illustrating a controlling method of an electronic apparatus.

### [Detailed Description of Exemplary Embodiments]

The disclosure will be described in detail below with reference to the accompanying drawings.

Terms used in describing embodiments are general terms selected that are currently widely used considering their function herein. However, the terms may change depending on intention, legal or technical interpretation, emergence of new technologies, and the like of those skilled in the related art. In certain cases, there may be terms arbitrarily selected, and in this case, the meaning of the term will be disclosed in detail in the corresponding description. Accordingly, the terms used herein are not to be understood simply as its designation but based on the meaning of the term and the overall context of the disclosure.

In the disclosure, expressions such as "have," "may have," "include," and "may include" are used to designate a presence of a corresponding characteristic (e.g., elements such as numerical value, function, operation, or component), and not to preclude a presence or a possibility of additional characteristics.

The expression at least one of A and/or B is to be understood as indicating any one from among "A" or "B" or "A and B."

Expressions such as "1st", "2nd", "first" or "second" used in the disclosure may limit various elements regardless of order and/or importance, and may be used merely to distinguish one element from another element and not limit the relevant element.

When a certain element (e.g., first element) is indicated as being "(operatively or communicatively) coupled with/to" or "connected to" another element (e.g., second element), it may be understood as the certain element being directly coupled with/to the another element or as being coupled through other element (e.g., third element).

A singular expression includes a plural expression, unless otherwise specified. It is to be understood that the terms such as "form" or "include" are used herein to designate a presence of a characteristic, number, step, operation, element, component, or a combination thereof, and not to preclude a presence or a possibility of adding one or more of other characteristics, numbers, steps, operations, elements, components or a combination thereof.

In the disclosure, the term "module" or "part" may perform at least one function or operation, and may be implemented with hardware or software, or implemented with a combination of hardware and software. A plurality of "modules" or a plurality of "parts," except for a "module" or a "part" which needs to be implemented to a specific hardware, may be integrated in at least one module and implemented as at least one processor (not shown).

In the disclosure, the term "user" may refer to a person using an electronic apparatus or an apparatus (e.g., artificial intelligence electronic apparatus) using the electronic apparatus.

The disclosure will be described in greater detail below with reference to the accompanied drawings.

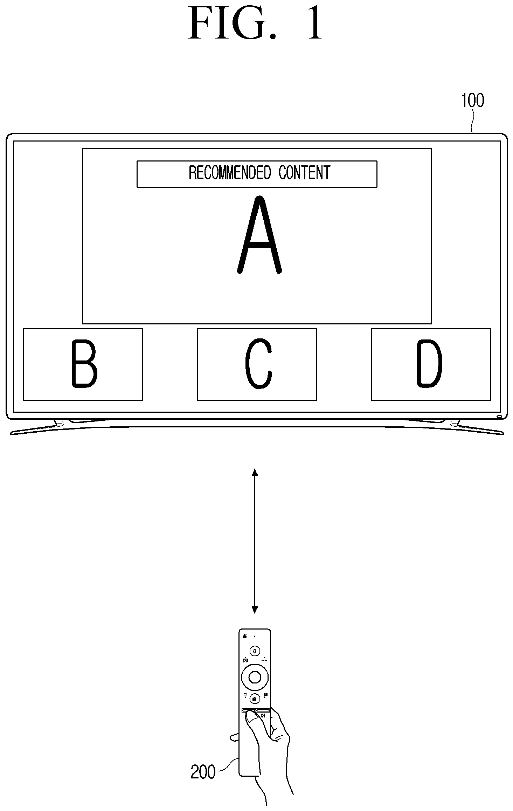

FIG. 1 is a diagram illustrating an operation for providing recommended content.

Referring to FIG. 1, an electronic apparatus 100 may provide the recommended content based on a pre-set event. The electronic apparatus 100 may be a machine that provides content.

The pre-set event may include a pre-set user action obtained from the electronic apparatus 100.

The pre-set event may include a pattern of repeatedly inputting a channel Up/Down key.

The pre-set event may include a pattern of repeatedly moving an activation cursor (or UI) in a UG/EPG or a channel list.

The pre-set event may include a pattern of repeatedly executing an external source or an application.

The pre-set event may include a pattern of repeatedly inputting an up/down/left/right key in an OTT application, an OTT machine, a set top box, or the like.

The pre-set event may be determined based on an action obtained in the electronic apparatus 100 itself.

The pre-set event may be determined based on an action obtained through a remote control apparatus 200.

In FIG. 1, the electronic apparatus 100 has been described as including a display, but the electronic apparatus 100 may not include the display. The electronic apparatus 100 may merely determine whether to provide content, and the content may be displayed through an external machine.

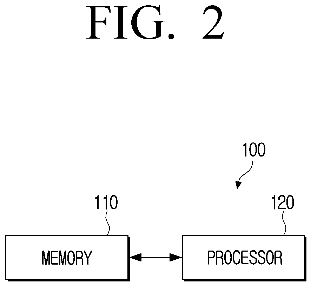

FIG. 2 is a block diagram illustrating the electronic apparatus 100.

Referring to FIG. 2, the electronic apparatus 100 includes a memory 110 and at least one processor 120.

The electronic apparatus 100 may be a machine that provides content.

The electronic apparatus 100 may include a display. The electronic apparatus 100 may display content through the display. For example, the electronic apparatus 100 may mean a TV, a smartphone, or the like.

The electronic apparatus 100 may include various apparatuses which include displays. The electronic apparatus 100 may be an electronic blackboard, a TV, a desktop personal computer (PC), a notebook, a smartphone, a tablet PC, a server, and the like. The above-described examples are merely examples for describing the electronic apparatus, and are not necessarily limited to the above-described apparatuses.

The electronic apparatus 100 may be a computation processing machine that does not include a display. The electronic apparatus 100 may not directly display content and determine whether to provide content. For example, the electronic apparatus 100 may mean an external server.

The electronic apparatus 100 may include at least one from among the memory 110 which stores a pre-set pattern and the recommended content or at least one processor 120.

The at least one processor 120 may perform an overall control operation of the electronic apparatus 100. The at least one processor 120 may perform a function of controlling the overall operation of the electronic apparatus 100.

The at least one processor 120 may obtain first context information which includes a plurality of user inputs, obtain a predetermined event based on an identification result of a pre-set pattern when the pre-set pattern is identified according to the first context information, obtain second context information which includes the plurality of user inputs, and provide the recommended content when the predetermined event is identified based on the second context information.

The at least one processor 120 may obtain the first context information at a first time-point or a first period. The first context information may include information associated with the plurality of user inputs. The first context information may include various information associated with the electronic apparatus 100 at the first time-point or the first period in addition to the user input.

The context information may include at least one from among a user input, a control result corresponding to the user input, and information associated with the electronic apparatus 100.

The user input may include an artificial command by a user.

The control result corresponding to the user input may include various information associated with control operations such as whether to perform control operations, and time spent in performing control operations.

The information associated with the electronic apparatus 100 may include state information of the machine that displays content. The state information may include screen information or driving state, and the like which is displayed in the electronic apparatus 100.

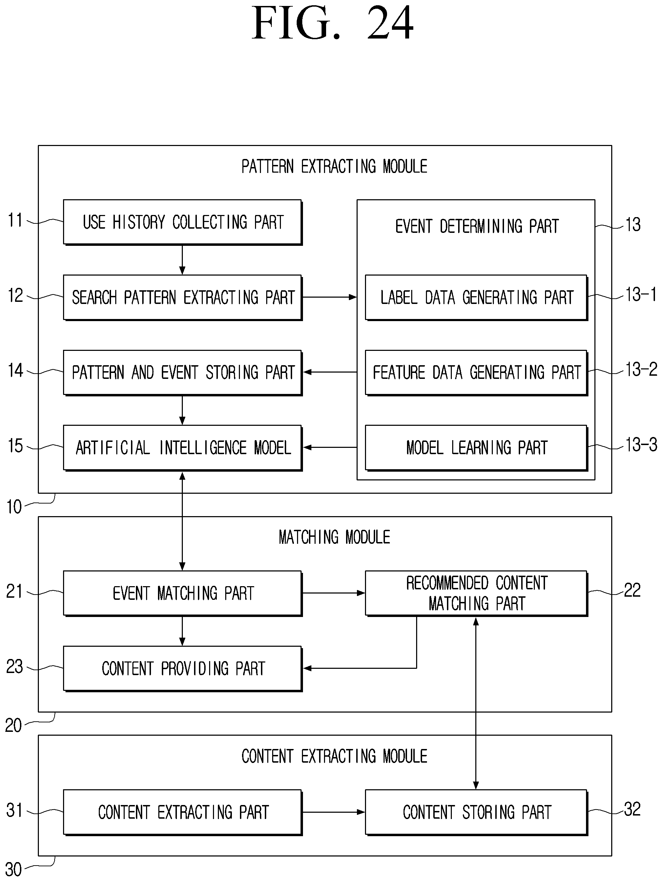

The context information may be described as record data with reference to the description of FIG. 24.

The pre-set pattern may include a pattern representing a user action of not having selected content. The pre-set pattern may be described as a pre-set user action.

The pre-set pattern may include a pattern with a likelihood to be determined as content recommendation necessary to the user.

The pre-set pattern may include a pattern which is recognized as a user not selecting a specific content and preparing to select a content to be viewed.

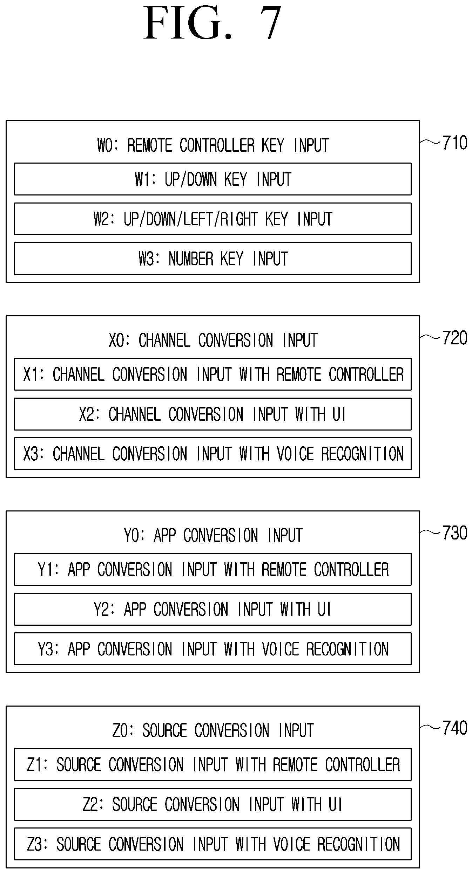

The pre-set pattern may include at least one from among a pattern associated with a key input of the remote control apparatus 200 connected with the electronic apparatus 100, a pattern associated with a channel conversion (switching) input, i.e. changing channels, a pattern associated with an application conversion (switching) input, and a pattern associated with a source conversion (switching) input connected with the electronic apparatus 100. Detailed descriptions associated therewith will be described with reference to FIG. 7.

the pre-set pattern may be pre-stored. The electronic apparatus 100 or a server 300 may determine whether the pre-stored pattern is identifiable from the context information.

If the pre-set pattern is not pre-stored, the electronic apparatus 100 or the server 300 may determine the predetermined event based on context information. The electronic apparatus 100 or the server 300 may obtain a predetermined event indicating whether to provide the recommended content to the user by analyzing a plurality of user actions or patterns included in the context information.

The predetermined event may include a condition for providing the recommended content to the user. The predetermined event may be described as a target event. Based on the predetermined event being determined based on the first context information, the expression 'determining a predetermined event' is not to be interpreted as deciding on an already decided event.

The at least one processor 120 may obtain (or determine) one predetermined event from among a plurality of predetermined events based on the first context information.

The at least one processor 120 may obtain (or generate) the target event (the predetermined event) based on the first context information.

The at least one processor 120 may obtain one pattern from among a plurality of pre-set patterns as a predetermined event based on the first context information.

The at least one processor 120 may obtain the identified pre-set pattern as a predetermined event based on the first context information.

The pre-set pattern and the predetermined event may be the same as or different from each other.

The at least one processor 120 may identify at least one user input indicating a time-point to provide the recommended content from among the plurality of user inputs included in the first context information, and obtain a predetermined event based on the identified at least one user input.

The predetermined event may be used in determining a time-point to recommend content to the user. If the predetermined event is identified based on the second context information, the at least one processor 120 may obtain a recommended content to provide to the user. The predetermined event may be described as a predetermined trigger or a predetermined condition.

The pre-set pattern may include a first pattern and a second pattern, the at least one processor 120 may obtain a first number of times that the first pattern is identified during a threshold time based on the first context information, obtain a second number of times that the second pattern is identified during the threshold time based on the first context information, and obtain a predetermined event based on the first number of times and the second number of times.

The at least one processor 120 may obtain, based on the first number of times being greater than or equal to a first threshold value which corresponds to the first pattern, a first median value based on a pre-set value and a first weight value corresponding to the first pattern, obtain, based on the second number of times being greater than or equal to a second threshold value which corresponds to the second pattern, a second median value based on the pre-set value and a second weight value corresponding to the second pattern, obtain a sum value of having added the first median value and the second median value, and obtain, based on the sum value being greater than or equal to a third threshold value, a predetermined event based on the first context information.

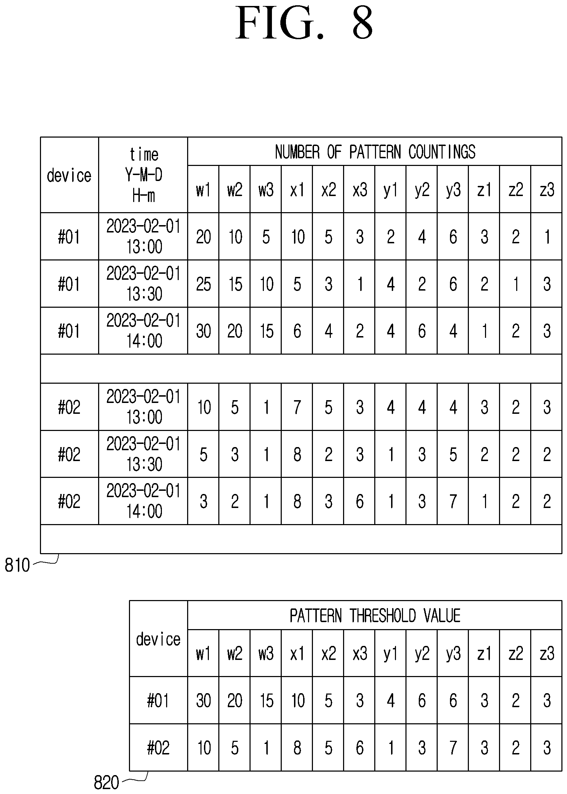

Detailed descriptions associated therewith will be described with reference to FIG. 8 to FIG. 13.

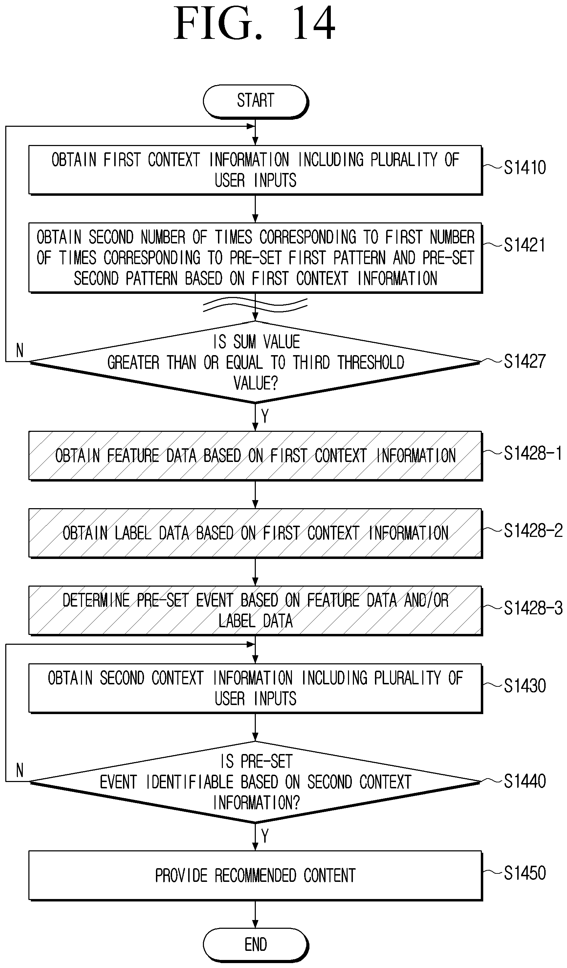

The at least one processor 120 may obtain, based on the sum value being greater than or equal to the third threshold value, feature data and label data based on the first context information, and determine a predetermined event based on the feature data and the label data. Detailed descriptions associated therewith will be described with reference to FIG. 14.

The feature data may include at least one information necessary in determining the time-point to provide the recommended content from among a plurality of information included in the context information. The size of the feature data may be smaller than the size of the context information. The feature data may be data necessary in obtaining the predetermined event. The feature data may be data used in learning by an artificial intelligence model. The feature data may be result data of a pre-processing operation having been performed on the context information.

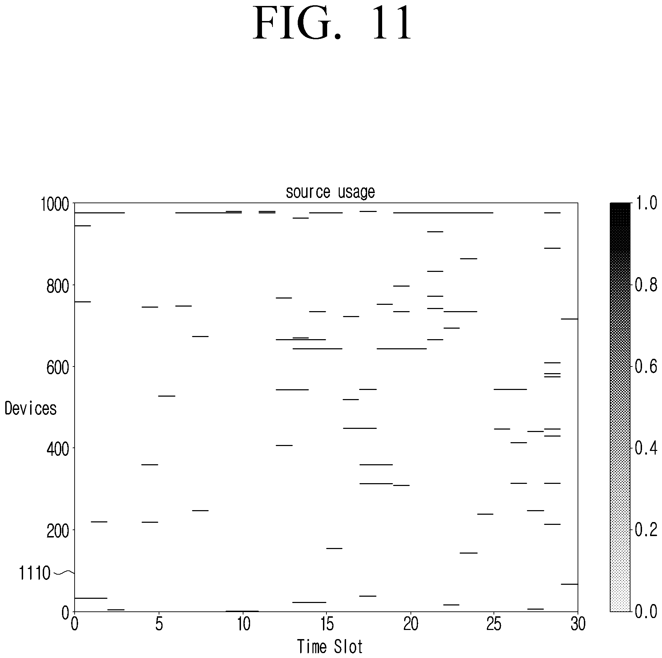

The label data may be data indicating whether the pre-set pattern identified from the context information is an action of not selecting content. Descriptions associated with label data will be described with reference to FIG. 11.

The at least one processor 120 may obtain, based on the second context information being obtained, a third number of times that the first pattern is identified during the threshold time based on the second context information, obtain a fourth number of times that the second pattern is identified during the threshold time based on the second context information, update the first threshold value based on the third number of times, and update the second threshold value based on the fourth number of times.

The electronic apparatus 100 may update a threshold value corresponding to a pre-set pattern based on the context information according to the same machine or the same user account.

The electronic apparatus 100 may update the threshold value corresponding to the pre-set pattern based on the context information of different machines or different user accounts. For example, the electronic apparatus 100 may use the context information (or an identification result of the pre-set pattern) obtained from a second machine in terms of updating the threshold value used in a first machine.

The at least one processor 120 may compare the identified number of times of the first pattern and the first threshold value. The at least one processor 120 may compare the identified number of times of the second pattern and the second threshold value. The at least one processor 120 may update (generate, change, maintain) the first threshold value or the second threshold value based on a newly obtained context information. The threshold value which is compared with the identified number of times of each pattern may be a number of times corresponding to an upper threshold ratio (e.g., top 1%) from a cumulative identified number of times. A calculation process associated therewith will be described with reference to FIG. 8.

The at least one processor 120 may provide, based on a predetermined event being identified according to the second context information, a guide screen associated with the recommended content, and update, based on a user feedback being received through the guide screen, the predetermined event based on the user feedback.

The guide screen may include a user interface (UI) for deleting the predetermined event, and the at least one processor 120 may delete the predetermined event when the user feedback is received through the UI for deleting the predetermined event.

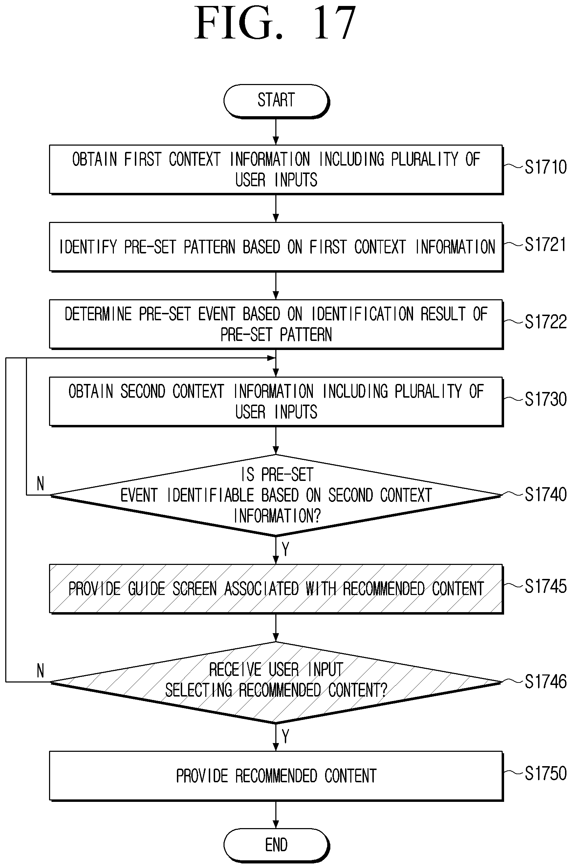

Detailed descriptions associated with the guide screen will be described with reference to FIG. 17 to FIG. 20.

The at least one processor 120 may generate, based on the pre-set pattern being identified according to the first context information, an artificial intelligence model for determining the predetermined event based on the identification result of the pre-set pattern, input the second context information in the artificial intelligence model, obtain a probability value indicating whether the predetermined event is identifiable as output data based on the second context information through the artificial intelligence model, and provide, based on the probability value being greater than or equal to a fourth threshold value, the recommended content.

The fourth threshold value may be changed according to a user setting.

The higher the probability value is, it may mean that a likelihood of the recommended content being determined as necessary to the user is high.

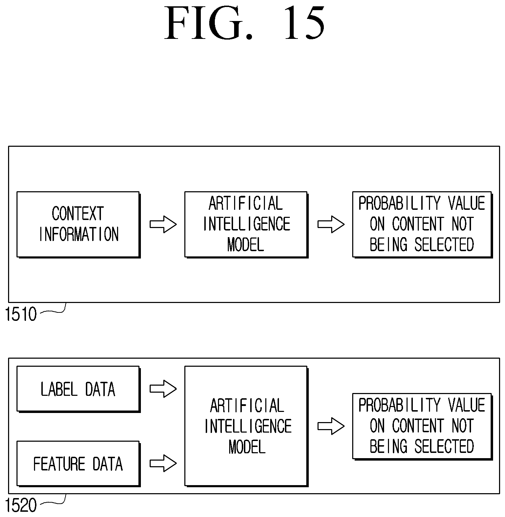

Detailed descriptions associated with the artificial intelligence model are described with reference to FIG. 15, FIG. 16, and FIG. 24.

The electronic apparatus 100 may obtain a predetermined event necessary in determining the content recommended time-point by using context information associated with a machine used directly by the user. Accordingly, content may be recommended using an algorithm personalized (or optimized) to the user.

The electronic apparatus 100 may update an existing algorithm using feedback. Accuracy may be improved with the updated algorithm. By deleting the predetermined event using feedback, user inconvenience (or aversion) may be reduced.

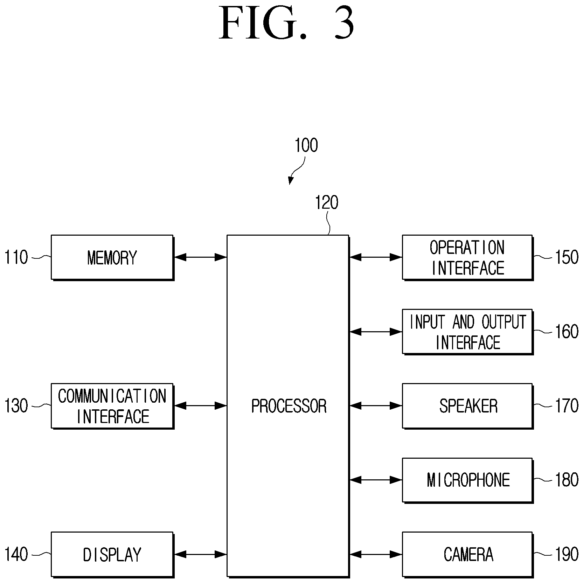

FIG. 3 is a block diagram illustrating a detailed configuration of the electronic apparatus of FIG. 2.

Referring to FIG. 3, the electronic apparatus 100 includes a memory 110 and at least one processor 120, and may include a communication interface 130, a display 140, an operation interface 150, an input and output interface 160, a speaker 170, a microphone 180, and a camera 190.

The memory 110 may be implemented as an internal memory such as a read only memory (ROM) (e.g., an electrically erasable programmable read-only memory (EEPROM)), a random access memory (RAM), and the like included in the processor 120, or implemented as a memory separate from the processor 120. In this case, the memory 110 may be implemented in the form of a memory embedded in the electronic apparatus 100 according to a data storage use, or implemented in the form of a memory attachable to or detachable from the electronic apparatus 100. For example, the data for the driving of the electronic apparatus 100 may be stored in a memory embedded to the electronic apparatus 100, and data for an expansion function of the electronic apparatus 100 may be stored in a memory detachable from the electronic apparatus 100. For example, data for driving the electronic apparatus 100 may be stored in the memory embedded in the electronic apparatus 100, and data for an expansion function of the electronic apparatus 100 may be stored in the memory attachable to or detachable from the electronic apparatus 100.

The memory embedded in the electronic apparatus 100 may be implemented as at least one from among a volatile memory (e.g., a dynamic RAM (DRAM), a static RAM (SRAM), or a synchronous dynamic RAM (SDRAM)), or a non-volatile memory (e.g., one time programmable ROM (OTPROM), programmable ROM (PROM), erasable and programmable ROM (EPROM), electrically erasable and programmable ROM (EEPROM), mask ROM, flash ROM, a flash memory (e.g., NAND flash or NOR flash), a hard disk drive (HDD) or a solid state drive (SSD)). The memory attachable to or detachable from the electronic apparatus 100 may be implemented in a form such as, for example, and without limitation, a memory card (e.g., a compact flash (CF), a secure digital (SD), a micro secure digital (micro-SD), a mini secure digital (mini-SD), an extreme digital (xD), a multi-media card (MMC), etc.), an external memory (e.g., a USB memory) connectable to a USB port, or the like.

The memory 110 may store at least one instruction. The processor 120 may perform various operations based on the instructions stored in the memory 110.

The at least one processor 120 may be implemented as a digital signal processor (DSP), a microprocessor, or a time controller (TCON). However, the implementation is not limited thereto, and may include one or more from among a central processing unit (CPU), a micro controller unit (MCU), a micro processing unit (MPU), a controller, an application processor (AP), a graphics-processing unit (GPU), a communication processor (CP), or an advanced reduced instruction set computer (RISC) machine (ARM) processor, or may be defined by the corresponding term. The processor 120 may be implemented as a System on Chip (SoC) or the large scale integration (LSI) embedded with a processing algorithm, and may be implemented in the form of a field programmable gate array (FPGA). The at least one processor 120 may perform various functions by executing computer executable instructions stored in the memory.

The communication interface 130 may be a configuration for performing communication with external apparatuses of various types according to communication methods of various types. The communication interface 130 may include a wireless communication module or a wired communication module. Each communication module may be implemented in at least one hardware chip form.

The wireless communication module may be a module which communicates with an external apparatus wirelessly. For example, the wireless communication module may include at least one module from among a Wi-Fi module, a Bluetooth module, an infrared communication module, or other communication modules.

The Wi-Fi module and the Bluetooth module may perform communication in a Wi-Fi method and a Bluetooth method, respectively. When using the Wi-Fi module or the Bluetooth module, various connection information such as a service set identifier (SSID) and a session key may first be transmitted and received, and after communicatively connecting using the same, various information may be transmitted and received.

The infrared communication module may perform communication according to an infrared communication (Infrared Data Association (IrDA)) technology of transmitting data wirelessly in short range by using infrared rays present between visible rays and millimeter waves.

The other communication modules may include at least one communication chip that performs communication according to various wireless communication standards such as, for example, and without limitation, ZigBee, 3rd Generation (3G), 3rd Generation Partnership Project (3GPP), Long Term Evolution (LTE), LTE Advanced (LTE-A), 4th Generation (4G), 5th Generation (5G), and the like, in addition to the above-described communication methods.

The wired communication module may be a module for communicating with the external apparatus via wired communication. For example, the wired communication module may include at least one from among a local area network (LAN) module, an Ethernet module, a pair cable, a coaxial cable, an optical fiber cable, or an ultra wide-band (UWB) module.

The communication interface 130 may use the same communication module (e.g., Wi-Fi module) to communicate with the external apparatus such as a remote control apparatus and the external server.

The communication interface 130 may use different communication modules for communicating with the external apparatus such as the remote control apparatus and the external server. For example, the communication interface 130 may use at least one from among the Ethernet module or the Wi-Fi module for communicating with the external server, and use the Bluetooth module for communicating with the external apparatus such as the remote control apparatus. However, the above is merely an example, and the communication interface 130 may use at least one communication module from among various communication modules in case of communicating with a plurality of external apparatuses or the external server.

The display 140 may be implemented as displays in various forms such as, for example, and without limitation, a liquid crystal display (LCD), an organic light emitting diode (OLED) display, a plasma display panel (PDP), and the like. In the display 140, a driving circuit, which may be implemented in the form of an amorphous silicon thin film transistor (a-Si TFT), a low temperature poly silicon (LTPS) TFT, a low temperature poly silicon (LTPS) TFT, an organic TFT (OTFT), or the like, a backlight unit, and the like may be included. The display 140 may be implemented as a touch screen coupled with a touch sensor, a flexible display, a three-dimensional display (3D display), or the like. The display 140 may include not only a display panel that outputs an image, but also a bezel housing the display panel. The bezel may include a touch sensor (not shown) for sensing user interaction.

The operation interface 150 may be implemented with a device such as a button, a touch pad, a mouse and a keyboard, or implemented also as a touch screen capable of performing the above-described display function and the operation input function together therewith. The button may be a button of various types such as a mechanical button, a touch pad, or a wheel which is formed at a random area at a front surface part or a side surface part, a rear surface part, or the like of an exterior of a main body of the electronic apparatus 100.

The input and output interface 160 may be any one interface from among a high definition multimedia interface (HDMI), a mobile high-definition link (MHL), a universal serial bus (USB), a display port (DP), a Thunderbolt, a video graphics array (VGA) port, an RGB port, a D-subminiature (D-SUB), or a digital visual interface (DVI). The input and output interface 160 may input and output at least one from among an audio signal and a video signal. The input and output interface 160 may include a port which inputs and outputs only the audio signal and a port which inputs and outputs only the video signal as separate ports, or may be implemented as one port which inputs and outputs both the audio signal and the video signal. The electronic apparatus 100 may transmit at least one from among the audio signal and the video signal to the external apparatus (e.g., an external display apparatus or an external speaker) through the input and output interface 160. An output port included in the input and output interface 160 may be connected with the external apparatus, and the electronic apparatus 100 may transmit at least one from among the audio signal and the video signal to the external apparatus through the output port.

The input and output interface 160 may be connected with a communication interface. The input and output interface 160 may transmit information received from the external machine to the communication interface or transmit information received through the communication interface to the external machine.

The speaker 170 may be an element that outputs not only various audio data, but also various notification sounds, voice messages, or the like.

The microphone 180 may be a configuration for receiving input of a user voice or other sounds and converting to audio data. The microphone 180 may receive the user voice in an activated state. For example, the microphone 180 may be formed as an integrated-type at an upper side or a front surface direction, a side surface direction or the like of the electronic apparatus 100. The microphone 180 may include various configurations such as, for example, and without limitation, a microphone that collects the user voice in an analog form, an amplifier circuit that amplifies the collected user voice, an A/D converter circuit that samples the amplified user voice and converts to a digital signal, a filter circuit that removes noise components from the converted digital signal, and the like.

The camera 190 may be a configuration for capturing a subject and generating a captured image, and here, the captured image may be a concept that includes both a moving image and a still image. The camera 190 may obtain an image of the at least one external machine, and may be implemented with a camera, a lens, an infrared sensor, and the like.

The camera 190 may include a lens and an image sensor. Types of the lens may include a typical general-purpose lens, a wide-angle lens, a zoom lens, and the like, and may be determined according to a type, a characteristic, use environment, and the like of the electronic apparatus 100. A complementary metal oxide semiconductor (CMOS), a charge coupled device (CCD), and the like may be used as the image sensor.

The electronic apparatus 100 may include the display 140. The electronic apparatus 100 may directly display the obtained image or content in the display 140.

However, the electronic apparatus 100 may not include the display 140. The electronic apparatus 100 may be connected with an external display apparatus, and may transmit an image or content stored in the electronic apparatus 100 to the external display apparatus.

The electronic apparatus 100 may transmit an image or content together with a control signal to control for the image or content to be displayed in the external display apparatus to the external display apparatus. The external display apparatus may be connected with the electronic apparatus 100 through the communication interface 130 or the input and output interface 160. For example, the electronic apparatus 100 may not include a display such as a set top box (STB).

The electronic apparatus 100 may include a small-scale display only capable of displaying only simple information such as text information. The electronic apparatus 100 may transmit the image or content to the external display apparatus via wired or wireless means through the communication interface 130 or transmit to the electronic apparatus 100 through the input and output interface 160.

There may be various examples of the electronic apparatus 100 performing an operation corresponding to a user voice signal received through the microphone 180.

The electronic apparatus 100 may control the display 140 based on the user voice signal received through the microphone 180. For example, if the user voice signal for displaying an A content is received, the electronic apparatus 100 may control the display 140 to display the A content.

The electronic apparatus 100 may control the external display apparatus connected with the electronic apparatus 100 based on the user voice signal received through the microphone 180. The electronic apparatus 100 may generate a control signal for controlling the external display apparatus for an operation corresponding to the user voice signal to be performed in the external display apparatus, and transmit the generated control signal to the external display apparatus. The electronic apparatus 100 may store a remote control application for controlling the external display apparatus. Further, the electronic apparatus 100 may transmit the generated control signal to the external display apparatus using at least one communication method from among Bluetooth, Wi-Fi, or infrared rays. For example, if the user voice signal for displaying the A content is received, the electronic apparatus 100 may transmit the control signal to control for the A content to be displayed in the external display apparatus to the external display apparatus. The electronic apparatus 100 may mean various terminal apparatuses in which remote control applications can be installed such as a smartphone, an AI speaker, and the like.

The electronic apparatus 100 may use the remote control apparatus to control the external display apparatus connected with the electronic apparatus 100 based on the user voice signal received through the microphone 180. The electronic apparatus 100 may transmit the control signal to control the external display apparatus for an operation corresponding to the user voice signal to be performed in the external display apparatus to the remote control apparatus. Further, the remote control apparatus may transmit the control signal received from the electronic apparatus 100 to the external display apparatus. For example, if the user voice signal for displaying the A content is received, the electronic apparatus 100 may transmit the control signal to control for the A content to be displayed in the external display apparatus to the remote control apparatus, and the remote control apparatus may transmit the received control signal to the external display apparatus.

The electronic apparatus 100 may receive the user voice signal in various methods.

The electronic apparatus 100 may receive the user voice signal through the microphone 180 included in the electronic apparatus 100.

The electronic apparatus 100 may receive the user voice signal from an external apparatus which includes the microphone. The external apparatus may mean the remote control apparatus, the smartphone, or the like. The received user voice signal may be a digital voice signal, or may be an analog voice signal. The electronic apparatus 100 may receive the user voice signal through a wireless communication method such as Bluetooth and Wi-Fi.

The electronic apparatus 100 may convert the user voice signal through various methods.

The electronic apparatus 100 may obtain text information corresponding to the user voice signal from the external server. The electronic apparatus 100 may transmit the user voice signal (audio signal or digital signal) to the external server. The external server may mean a voice recognition server. The voice recognition server may convert the user voice signal to text information using speech to text (STT). Further, the external server may transmit text information corresponding to the converted user voice signal to the electronic apparatus 100.

Linguistic understanding may be a technique which recognizes, applies, and processes languages/characters (letters) of humans, and may include, for example, and without limitation, natural language processing, machine translation, dialog system, questions and answers, voice recognition/synthesis, and the like.

The electronic apparatus 100 may obtain text information corresponding to the user voice signal on its own. The electronic apparatus 100 may convert to text information by applying the speech to text (STT) function directly to the digital voice signal and transmit the converted text information to the external server.

The external server may transmit information to the external server through various methods.

The external server may transmit the text information corresponding to the user voice signal to the electronic apparatus 100. The external server may be a server that performs the voice recognition function of converting the user voice signal to text information.

The external server may transmit at least one from among the text information corresponding to the user voice signal or search result information corresponding to the text information to the electronic apparatus 100. The external server may be a server that performs a search result providing function of providing search result information corresponding to text information in addition to the voice recognition function of converting the user voice signal to text information. In an example, the external server may be a server that performs both the voice recognition function and the search result providing function. In another example, the external server may perform only the voice recognition function and the search result providing function may be performed in a separate server. The external server may transmit text information to the separate server to obtain the search result and obtain the search result corresponding to the text information from the separate server.

The electronic apparatus 100 may communicatively connect with the external apparatus and the external server through various methods.

A communication module for communicating with the external apparatus and the external server may be implemented the same way. For example, the electronic apparatus 100 may communicate with the external apparatus using the Bluetooth module, and also communicate with the external server using the Bluetooth module as well.

Alternatively, the communication module for communicating with the external apparatus and the external server may be separately implemented. For example, the electronic apparatus 100 may communicate with the external apparatus using the Bluetooth module, and communicate with the external server using an Ethernet modem or the Wi-Fi module.

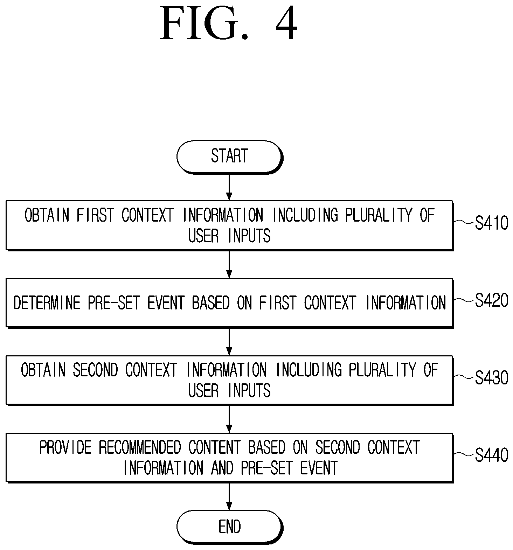

FIG. 4 is a flowchart illustrating an operation for providing recommended content based on context information.

Referring to FIG. 4, the electronic apparatus 100 may obtain the first context information including the plurality of user inputs (S410). The electronic apparatus 100 may obtain the first context information during a threshold time. The first context information may include information associated with the user action obtained from the electronic apparatus 100.

The electronic apparatus 100 may determine the pre-set event based on the first context information (S420). The pre-set event may include an event of predicting that the user is not able to decide content.

The electronic apparatus 100 may obtain the second context information including the plurality of user inputs (S430). A time-point of obtaining second context information may be a time-point after a time-point of obtaining first context information.

The electronic apparatus 100 may provide the recommended content based on the second context information and the pre-set event (S440).

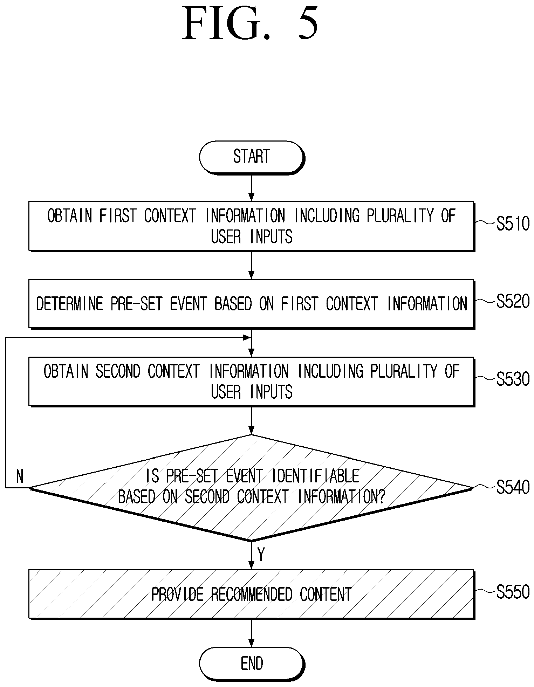

FIG. 5 is a flowchart illustrating an identification operation of a pre-set event.

Steps S510, S520, and S530 in FIG. 5 correspond to steps S410, S420, and S430 in FIG. 4. Accordingly, redundant descriptions thereof will be omitted.

After obtaining the second context information, the electronic apparatus 100 may determine whether the pre-set event is identifiable based on the second context information (S540).

If the pre-set event is not identifiable based on the second context information (S540-N), the electronic apparatus 100 may repeatedly perform steps S530 and S540.

If the pre-set event is identifiable based on the second context information (S540-Y), the electronic apparatus 100 may provide the recommended content (S550).

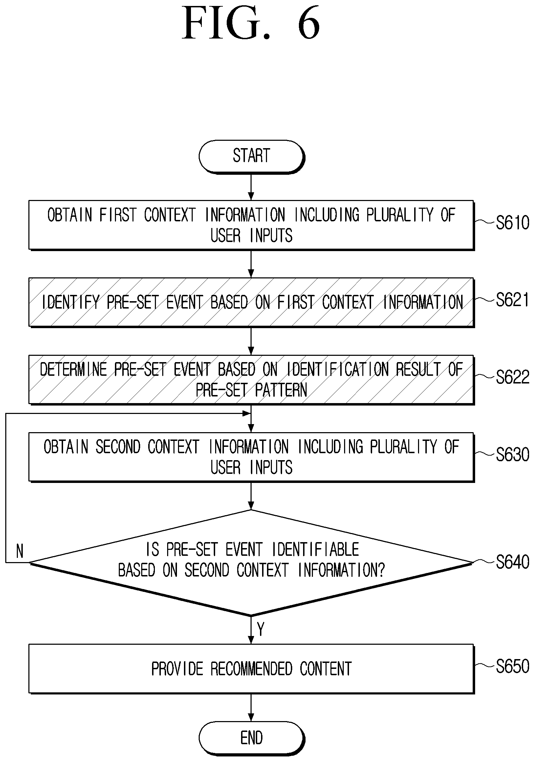

FIG. 6 is a flowchart illustrating a determining operation of a pre-set event.

Steps S610, S630, S640, and S650 in FIG. 6 correspond to steps S510, S530, S540, and S550 in FIG. 5. Accordingly, redundant descriptions thereof will be omitted.

After obtaining the first context information, the electronic apparatus 100 may identify the pre-set pattern based on the first context information (S621). The pre-set pattern may mean a pattern which is pre-decided by the user. Descriptions associated therewith will be described in FIG. 7.

The electronic apparatus 100 may determine the pre-set event based on the identification result of the pre-set pattern (S622). Descriptions associated therewith will be described in FIG. 8 to FIG. 11.

FIG. 7 is a diagram illustrating a pre-set pattern.

Referring to example 710 in FIG. 7, a pre-set pattern w0 may include a remote controller key input (or number of key inputs) obtained during a threshold time. A pre-set pattern w1 may include an up key or a down key(e.g. for volume up/down, for channel up/down) input obtained during the threshold time. A pre-set pattern w2 may include an up, down, left, or right key(e.g. for cursor movement) input obtained during the threshold time. A pre-set pattern w3 may include a number key input obtained during the threshold time. The pre-set pattern w0 may be the sum of the w1, w2, and w3 patterns.

Referring to example 720 in FIG. 7, a pre-set pattern x0 may include the channel conversion (switching) input (or number of conversion (switching) inputs). A pre-set pattern x1 may include the channel switching input obtained through a remote controller during the threshold time. A pre-set pattern x2 may include the channel switching input obtained through a UI during the threshold time. A pre-set pattern x3 may include the channel switching input obtained through voice recognition during the threshold time. The pre-set pattern x0 may be the sum of the x1, x2, and x3 patterns.

Referring to example 730 in FIG. 7, a pre-set pattern y0 may include an application conversion (switching) input (or number of conversion (switching) inputs). A pre-set pattern y1 may include the application switching input obtained through the remote controller during the threshold time. A pre-set pattern y2 may include the application switching input obtained through the UI during the threshold time. A pre-set pattern y3 may include the application switching input obtained through voice recognition during the threshold time. The pre-set pattern y0 may be the sum of the y1, y2, and y3 patterns.

Referring to example 740 in FIG. 7, a pre-set pattern z0 may include a source conversion (switching) input (or number of conversion (switching) inputs). A pre-set pattern z1 may include the source switching input obtained through the remote controller during the threshold time. A pre-set pattern z2 may include the source switching input obtained through the UI during the threshold time. A pre-set pattern z3 may include the source switching input obtained through the voice recognition during the threshold time. The pre-set pattern z0 may be the sum of the z1, z2, and z3 patterns. A source may include at least one from among HDMI or a cable.

FIG. 8 is a diagram illustrating a number of patterns and a pattern threshold value.

Table 810 in FIG. 8 may include at least one first context information obtained from a first machine #01 and at least one first context information obtained from a second machine #02. Table 810 may include the number of times a plurality of pre-set patterns w1 to z3 are respectively identified during the threshold time.

For example, the first machine #01 may obtain the pre-set pattern w1 twenty-times and the pre-set pattern w2 ten-times during the threshold time at 13:00 on 2023-02-01.

The threshold time may be on a second basis or a minute basis.

Table 820 in FIG. 8 may include the threshold value corresponding to the respective pre-set patterns. The threshold value corresponding to the respective pre-set patterns may be described as a pattern threshold value.

The threshold value corresponding to the respective pre-set patterns may be a value predetermined by the user.

The threshold value corresponding to the respective pre-set patterns may be determined based on an obtained number of pattern identifications. For example, the first threshold value of a first pattern w1 of the first machine #01 may be determined based on a number of identifications of the first pattern w1. The electronic apparatus 100 may determine the number of identifications corresponding to top 1% from among the obtained number of identifications as the threshold value. The 1% may be changed according to the user setting.

Table 820 may include the result of having set a maximum number of identifications (or number of identifications of top 1%) with respect to the respective pre-set patterns w0, w1, w2, x1, x2, x3, y1, y2, y3, z1, z2, and z3 as the threshold value.

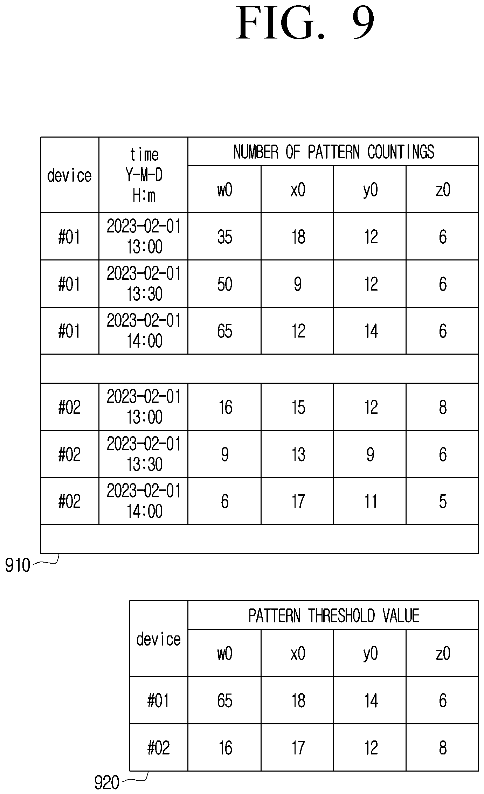

FIG. 9 is a diagram illustrating a number of patterns and a pattern threshold value.

Table 910 in FIG. 9 may include the result of having summed the pre-set patterns by type. The pre-set pattern w0 may be the sum of the w1, w2, and w3 patterns. The pre-set pattern x0 may be the sum of the x1, x2, and x3 patterns. The pre-set pattern y0 may be the sum of the y1, y2, and y3 patterns. The pre-set pattern z0 may be the sum of the z1, z2, and z3 patterns.

Table 920 in FIG. 9 may include the result of having set a maximum number of identifications (or number of identifications of top 1%) with respect to the respective pre-set patterns w0, x0, y0, and z0 as the threshold value.

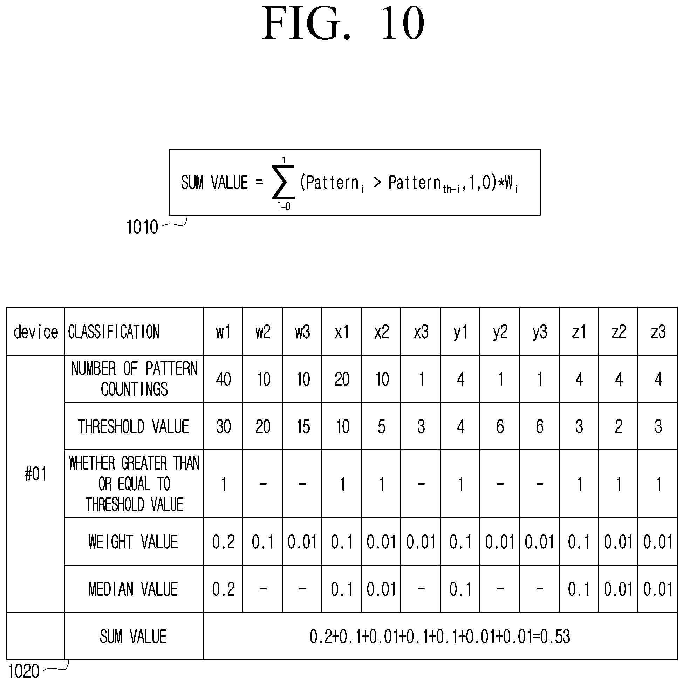

FIG. 10 is a diagram illustrating an operation for calculating a sum value.

Equation 1010 in FIG. 10 may be a calculation formula indicating a sum value.

Pattern_i may indicate an i-th pre-set pattern.

i may indicate an identification number of the pre-set pattern.

Pattern_th-i may indicate the threshold value corresponding to the respective pre-set patterns.

In FIG. 7 to FIG. 9, w, x, y, and z have been used, but the pre-set pattern may be represented as Pattern_1 to Pattern_12, and the like.

W_i may indicate a weight value corresponding to an i-th pre-set pattern. To differentiate from w1, w2, and w3, the pre-set pattern may be described with a lower case w, and the weight value may be described with an upper case W.

Table 1020 in FIG. 10 may include a sum value calculated according to Equation 1010. If the number of identifications of a specific pattern is greater than or equal to the threshold value of the specific pattern, the electronic apparatus 100 may assign a pre-set value 1. If the number of identifications of the specific pattern is less than the threshold value of the specific pattern, the electronic apparatus 100 may assign a pre-set value 0.

Considering the preset value (0 or 1) and the weight value, median values corresponding to the respective pre-set patterns may be obtained.

The electronic apparatus 100 may obtain a sum value by adding all of the median values corresponding to the respective pre-set patterns.

FIG. 11 is a diagram illustrating label data.

Table 1110 of FIG. 11 may indicate label data.

The electronic apparatus 100 may generate label data based on the sum value. Label data of a specific machine may be generated according to a range (0 to 1) of the sum value. Referring to table 1110, the higher the sum value, the darker the solid line may be expressed. The sum value being high may mean that there is a high likelihood of it being suitable for the user to receive content recommendation in the corresponding time slot (time interval).

If the sum value based on the calculation method in FIG. 10 is greater than or equal to the third threshold value, the electronic apparatus 100 may assign the pre-set value 1. If the sum value based on the calculation method in FIG. 10 is less than the third threshold value, the electronic apparatus 100 may assign the pre-set value 0. Referring to table 1110, the pre-set value 1 may be expressed as a solid line in a time slot corresponding the threshold time. A length of the solid line may indicate the threshold time.

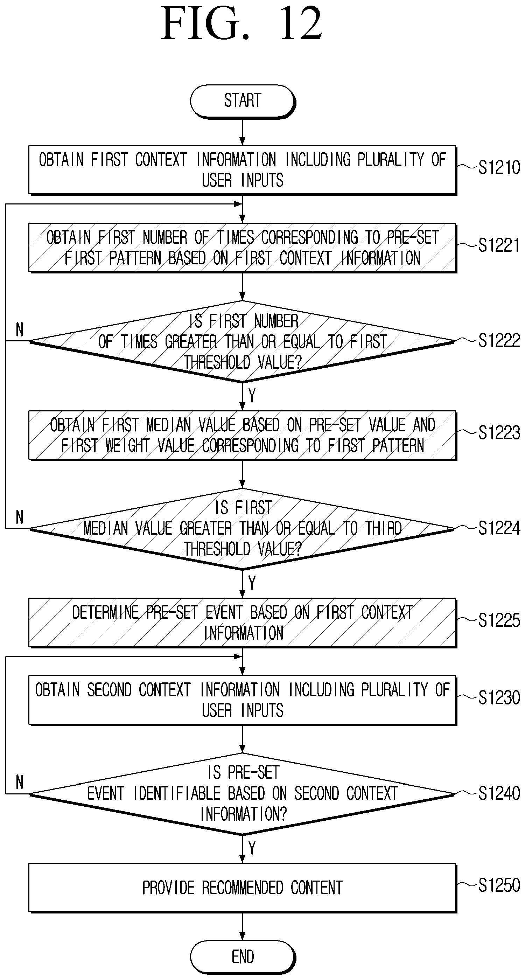

FIG. 12 is a flowchart illustrating an operation for determining a pre-set event based on a first number of times corresponding to a first pattern.

Steps S1210, S1230, S1240, and S1250 in FIG. 12 correspond to steps S610, S630, S640, and S650 in FIG. 6. Accordingly, redundant descriptions thereof will be omitted.

After obtaining the first context information, the electronic apparatus 100 may obtain the first number of times corresponding to a pre-set first pattern based on the first context information (S1221).

The electronic apparatus 100 may identify whether the first number of times is greater than or equal to the first threshold value (S1222). The first threshold value may be the threshold value (or number of thresholds) corresponding to the first pattern.

If the first number of times is less than the first threshold value (S1222-N), the electronic apparatus 100 may repeatedly perform steps S1221 and S1222.

If the first number of times is greater than or equal to the first threshold value (S1222-Y), the electronic apparatus 100 may obtain the first median value based on the pre-set value 1 and the first weight value corresponding to the first pattern (S1223).

The electronic apparatus 100 may identify whether the first median value is greater than or equal to the third threshold value (S1224).

If the first median value is less than the third threshold value (S1224-N), the electronic apparatus 100 may repeatedly perform steps S1221, S1222, and S1224.

If the first median value is greater than or equal to the third threshold value (S1224-Y), the electronic apparatus 100 may determine the pre-set event based on the first context information (S1225). Then, the electronic apparatus 100 may perform steps S1230, S1240, and S1250.

If the flowchart of FIG. 12 is applied to FIG. 10, the first pattern is w1, the first threshold value is 30, the pre-set value is 1, the first weight value is 0.2, and the first median value is 0.2.

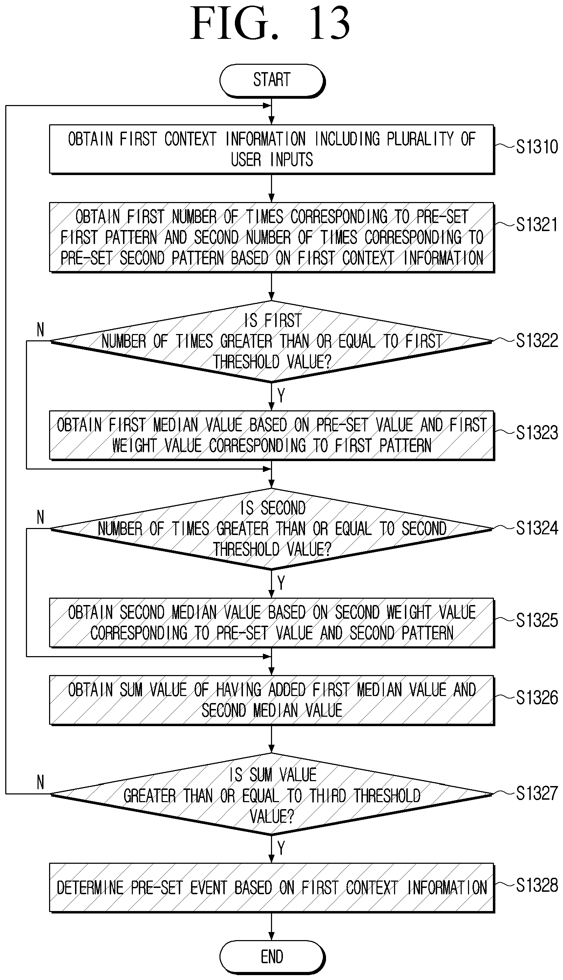

FIG. 13 is a flowchart illustrating an operation for determining a pre-set event based on a first number of times corresponding to a first pattern and a second number of times corresponding to a second pattern.

Step S1310 in FIG. 13 corresponds to step S1210 in FIG. 12. Accordingly, redundant descriptions thereof will be omitted.

After obtaining the first context information, the electronic apparatus 100 may obtain the first number of times corresponding to the pre-set first pattern and the second number of times corresponding to a pre-set second pattern based on the first context information (S1321).

The electronic apparatus 100 may identify whether the first number of times is greater than or equal to the first threshold value (S1322).

If the first number of times is greater than or equal to the first threshold value (S1322-Y), the electronic apparatus 100 may obtain the first median value based on the pre-set value and the first weight value corresponding to the first pattern (S1323). The electronic apparatus 100 may identify whether the second number of times is greater than or equal to the second threshold value (S1324).

If the first number of times is less than the first threshold value (S1322-N), the electronic apparatus 100 may perform step S1324.

If the second number of times is greater than or equal to the second threshold value (S1324-Y), the electronic apparatus 100 may obtain the second median value based on the pre-set value and the second weight value corresponding to the second pattern (S1325). The electronic apparatus 100 may obtain a sum value of having added the first median value and the second median value (S1326).

If the second number of times is less than the second threshold value (S1324-N), the electronic apparatus 100 may perform step S1326. If the first median value is not calculated, the first median value may be 0 in the process of obtaining the sum value.

The electronic apparatus 100 may identify whether the sum value greater is than or equal to the third threshold value (S1327). If the sum value is less than the third threshold value (S1327-N), the electronic apparatus 100 may repeatedly perform steps S1310, S1321, S1322, S1323, S1324, S1325, S1326, and S1327.

If the sum value is greater than or equal to the third threshold value (S1327-Y), the electronic apparatus 100 may determine the pre-set event based on the first context information (S1328). Then, the electronic apparatus 100 may perform steps S1230, S1240, and S1250 in FIG. 12.

If the flowchart of FIG. 13 is applied to FIG. 10, the first pattern is w1, the first threshold value is 30, the pre-set value is 1, the first weight value is 0.2, and the first median value is 0.2. The second pattern is w2, the second threshold value is 20, the pre-set value is 0, the second weight value is 0.1, and the second median value is 0.

FIG. 14 is a flowchart illustrating an operation for determining a pre-set event based on the feature data and the label data.

Steps S1410, and S1421 to S1427 in FIG. 14 correspond to steps S1310, and 1321 to S1327 in FIG. 13. Steps S1430, S1440, and S1450 in FIG. 14 correspond to steps S1230, S1240, and S1250 in FIG. 12. Accordingly, redundant descriptions thereof will be omitted.

If the sum value is greater than or equal to the third threshold value (S1427-Y), the electronic apparatus 100 may obtain the feature data based on the first context information (S1428-1). The feature data may include selected data used in an artificial intelligence model from the first context information.

The electronic apparatus 100 may obtain the label data based on the first context information (S1428-2). Descriptions associated with the label data may be described in FIG. 11.

The electronic apparatus 100 may determine the pre-set event based on the feature data and/or the label data (S1428-3). Then, the electronic apparatus 100 may perform steps S1430, S1440, and S1450.

In determining the pre-set event, the artificial intelligence model may be used.

FIG. 15 is a diagram illustrating an artificial intelligence model.

According to example 1510 in FIG. 15, the artificial intelligence model may be trained based on context information and a value indicating whether a content is selected (or played back). Learning input data may be context information, and learning output data may be the value indicating whether the content is selected. It may be 0 if the content is selected, and 1 if the content is not selected.

The artificial intelligence model may be trained based on whether a content has actually been selected in the electronic apparatus 100 in a state in which the context information is obtained. Based on learning, the artificial intelligence model may obtain a probability value on content not being selected as output data by receiving the context information as input data. The probability value on content not being selected may be a probability value on a likelihood that the content has not been selected.

The electronic apparatus 100 may determine whether to provide the recommended content based on the probability value obtained by the artificial intelligence model. The higher the probability value is, the higher the likelihood that the content is not selected. Accordingly, the electronic apparatus 100 may determine it suitable to provide the recommended content.

According to example 1520 in FIG. 15, the artificial intelligence model may be trained based on the label data, the feature data, and the value indicating whether the content is selected. The learning input data may be the label data and the feature data, and the learning output data may be the value indicating whether the content is selected. It may be 0 if the content is selected and it may be 1 if the content is not selected.

The artificial intelligence model may be trained based on whether the content has actually been selected in the electronic apparatus 100 in a state in which the label data and the feature data are obtained. Based on learning, the artificial intelligence model may obtain a probability value on content selection likelihood as output data by receiving the label data and the feature data as input data.

The artificial intelligence model may be generated (or obtained or updated) based on an unsupervised learning method of being trained in a state with no specific result value provided.

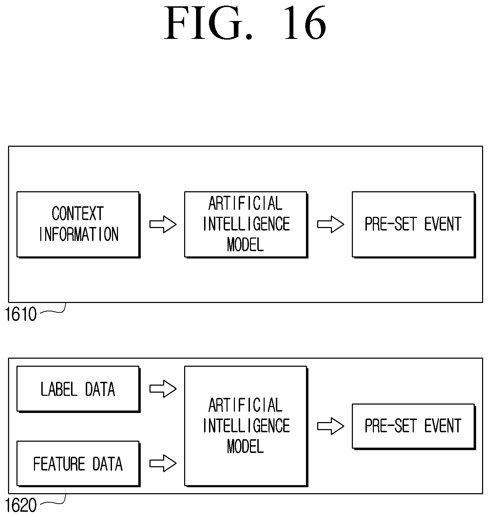

FIG. 16 is a diagram illustrating another artificial intelligence model.

Example 1610 and example 1620 in FIG. 16 correspond in part to example 1510 and example 1520 in FIG. 15. Accordingly, redundant descriptions thereof will be omitted.

In FIG. 15, the output data of the artificial intelligence model was the value indicating whether content is selected. In FIG. 16, the output data of the artificial intelligence model is a predetermined (pre-set) event.

In example 1610, the artificial intelligence model may obtain the predetermined event as output data by receiving the context information as input data. The predetermined event may include the user action with a high likelihood of the user not selecting the content based on the first context information. The artificial intelligence model may output a user action of the user not selecting content by analyzing the context information. The electronic apparatus 100 may determine, by obtaining the predetermined event (user action), a recommended content providing time-point according to whether the predetermined event actually occurred.

In example 1620, the input data of the artificial intelligence model may be the label data and the feature data. Other operations in addition thereto may be same as in example 1610. Accordingly, redundant descriptions thereof will be omitted.

FIG. 17 is a flowchart illustrating an operation for providing the guide screen associated with recommended content.

Steps S1710, S1721, S1722, S1730, S1740, and S 1750 in FIG. 17 correspond to steps S610, S621, S622, S630, S640, and S650 in FIG. 6. Accordingly, redundant descriptions thereof will be omitted.

If the predetermined event is identified based on the second context information, the electronic apparatus 100 may provide the guide screen associated with the recommended content (S1745). The guide screen may include at least one from among the UIs that guide the displaying of the recommended content. The guide screen may include information inquiring whether to display the recommended content. The electronic apparatus 100 may receive the user input through the guide screen. The user input may be an input selecting a specific content.

The electronic apparatus 100 may determine whether the user input of selecting the recommended content is received (S1746). If the user input of selecting the recommended content is not received (S1746-N), the electronic apparatus 100 may repeatedly perform steps S1730, S1740, S1745, and S1746.

If the user input of selecting the recommended content is received (S1746-Y), the electronic apparatus 100 may provide the selected recommended content (S1750).

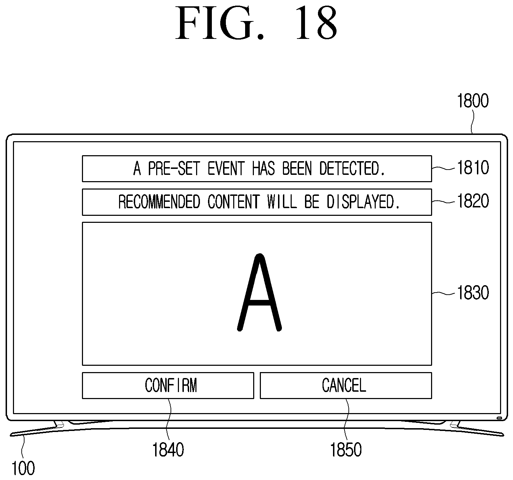

FIG. 18 is a diagram illustrating an operation for providing a guide screen associated with recommended content.

Screen 1800 in FIG. 18 may include at least one from among a UI 1810 indicating whether the predetermined event is identified, a UI 1820 indicating that the recommended content is displayed, a UI 1830 indicating information associated with the recommended content, a UI 1840 indicating a command for selecting the recommended content, and a UI 1850 indicating a command for not selecting the recommended content.

The UI 1810, indicating whether the predetermined event, is identified my include at least one from among a text or image indicating that the predetermined event has been sensed. For example, the UI 1810 may include text of a context "A pre-set event has been detected.".

The UI 1820 indicating that the recommended content is displayed may include at least one from among text or an image indicating that the recommended content is displayed. For example, the UI 1820 may include a text of a context "Recommended content will be displayed."

The UI 1830 indicating information associated with the recommended content may include a least one from among text or image indicating the recommended content. For example, the UI 1830 may include at least one from among a title, a thumbnail, and an image of the recommended content.

If a user selection input is received through the UI 1840 indicating a command for selecting the recommended content, the electronic apparatus 100 may provide the recommended content corresponding to the UI 1830.

If a user selection input is received through the UI 1850 indicating a command for not selecting the recommended content, the electronic apparatus 100 may not provide the recommended content corresponding to the UI 1830.

The electronic apparatus 100 may display a guide screen for providing a different recommended content which is different from the recommended content corresponding to UI 1830.

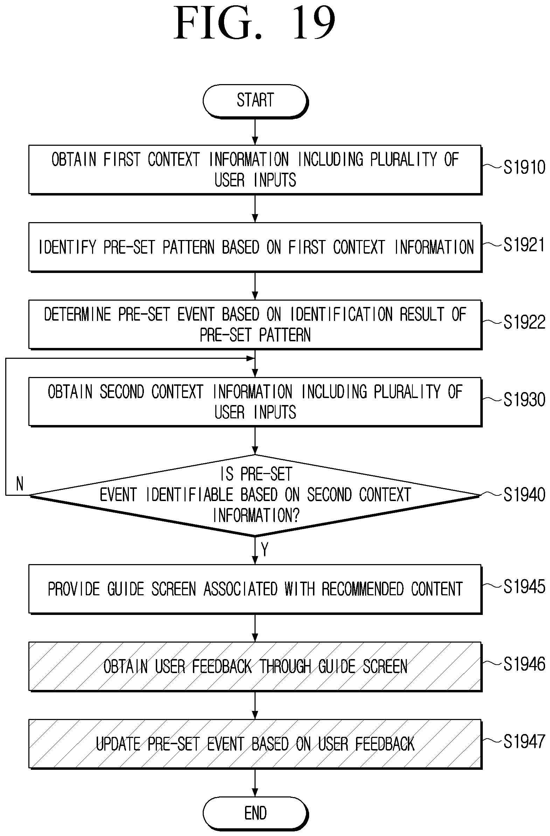

FIG. 19 is a flowchart illustrating an operation associated with user feedback.

Steps S1910, S1921, S1922, S1930, S1940, and S1945 in FIG. 19 correspond to steps S1710, S1721, S1722, S1730, S1740, and S1745 in FIG. 17. Accordingly, redundant descriptions thereof will be omitted.

After displaying the guide screen, the electronic apparatus 100 may receive the user feedback through the guide screen (S1946). The user feedback may mean feedback of various types which are received through the guide screen. For example, the user feedback may include at least one from among an event in which a user input of selecting the UI 1840 in FIG. 18 is received, an event in which a user input of selecting the UI 1850 in FIG. 18 is received, or an event in which no input is received whatsoever.

The electronic apparatus 100 may update the predetermined event based on the user feedback (S1947). The predetermined event determined in step S1922 may be updated (or changed) by the user feedback. For example, the predetermined event may be deleted based on the user feedback.

The determining operation of the predetermined event performed in step S1922 may be automatically stored regardless of a user intent. A specific action of the user may be automatically registered (or stored) as the predetermined event. The user may experience inconvenience due to his/her specific action being registered as the predetermined event despite not desiring to receive the recommended content.

The electronic apparatus 100 may delete or change the predetermined event through the user feedback.

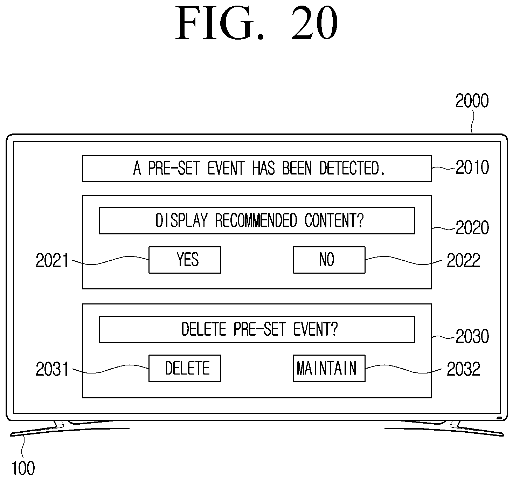

FIG. 20 is a diagram illustrating an operation associated with user feedback.

A screen 2000 of FIG. 20 may include at least one from among a UI 2010 indicating whether the predetermined event is identified, a UI 2020 indicating guide information associated with the recommended content, and a UI 2030 indicating guide information associated with the predetermined event.

The UI 2010 indicating whether the predetermined event is identified may include at least one from among a text or image indicating that the predetermined event has been sensed. For example, the UI 2010 may include text of a context "A pre-set event has been detected.".

The UI 2020 indicating guide information associated with the recommended content may include at least one from among a text (or an image) inquiring as to whether to display the recommended content, and UIs 2021 and 2022 indicating commands associated with the recommended content.

If the user selection input is received through the UI 2021 indicating a command of selecting the recommended content, the electronic apparatus 100 may provide the recommended content.

If the user selection input is received through the UI 2022 indicating a command of not selecting the recommended content, the electronic apparatus 100 may not provide the recommended content.

The UI 2030 indicating guide information associated with the predetermined event may include at least one from among a UI 2031 indicating a text (or image) inquiring as to whether to delete the predetermined event, a command for deleting the predetermined event, and a UI 2032 indicating a command for maintaining the predetermined event.

If the user input selecting the UI 2031 is received, the electronic apparatus 100 may delete the predetermined event. Even if the predetermined event is identified based on the context information, the electronic apparatus 100 may no longer provide a screen associated with the recommended content any more.

If the user input selecting UI 2032 is received, the electronic apparatus 100 may maintain the predetermined event.

The user input selecting UIs 2021, 2022, 2031, and 2032 may be used as the user feedback.

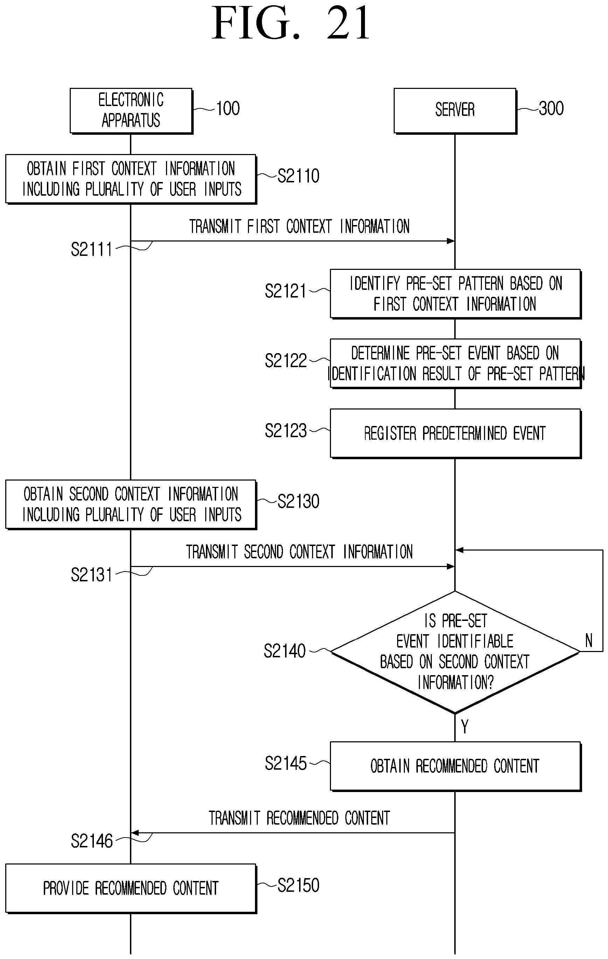

In FIG. 19 and FIG. 20, an operation of processing the user feedback has been described as being performed in the electronic apparatus 100. However, the operation of processing the user feedback and updating the predetermined event may be performed in the external server (e.g., server 300 in FIG. 21) rather than the electronic apparatus 100.

FIG. 21 is a flowchart illustrating an operation between the electronic apparatus 100 and the server 300.

Steps S2110, S2121, S2122, S2130, S2140, and S2150 in FIG. 21 correspond to steps S610, S621, S622, S630, S640, and S650 in FIG. 6. Accordingly, redundant descriptions thereof will be omitted.

Unlike the example of FIG. 6, in FIG. 21, a plurality of operations may divided between the electronic apparatus 100 or the server 300.

The electronic apparatus 100 may obtain the first context information including the plurality of user inputs (S2110). The electronic apparatus 100 may transmit the first context information to the server 300 (S2111).

The server 300 may receive the first context information from the electronic apparatus 100. The server 300 may identify the pre-set pattern based on the first context information (S2121). The server 300 may determine the predetermined event based on the identification result of the pre-set pattern (S2122). The server 300 may register the decided predetermined event (S2123).

After the predetermined event is registered, the electronic apparatus 100 may obtain the second context information including the plurality of user inputs (S2130). The electronic apparatus 100 may transmit the second context information to the server 300 (S2131).

The server 300 may receive the second context information from the electronic apparatus 100. The server 300 may determine whether the predetermined event is identifiable based on the second context information (S2140).

If the predetermined event is not identified based on the second context information (S2140-N), the server 300 may repeatedly perform step S2140.

If the predetermined event is identified based on the second context information (S2140-Y), the server 300 may obtain the recommended content (S2145). The server 300 may transmit the recommended content to the electronic apparatus 100 (S2146).

The electronic apparatus 100 may receive the recommended content from the server 300. The electronic apparatus 100 may provide the received recommended content (S2150).

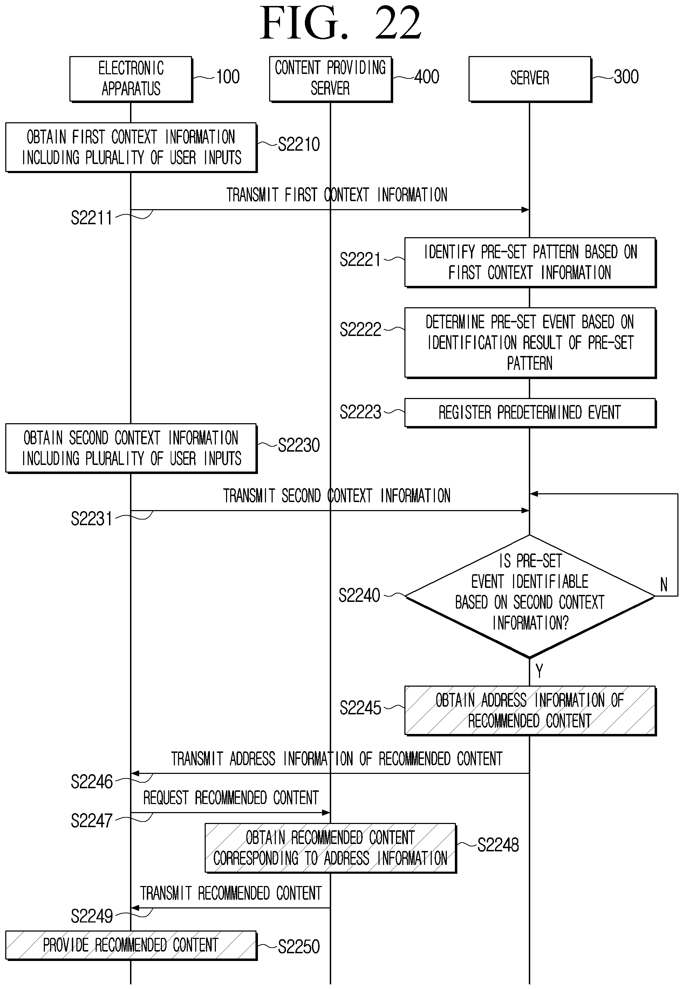

FIG. 22 is a flowchart illustrating an operation between the electronic apparatus 100, the server 300, and a content providing server 400.

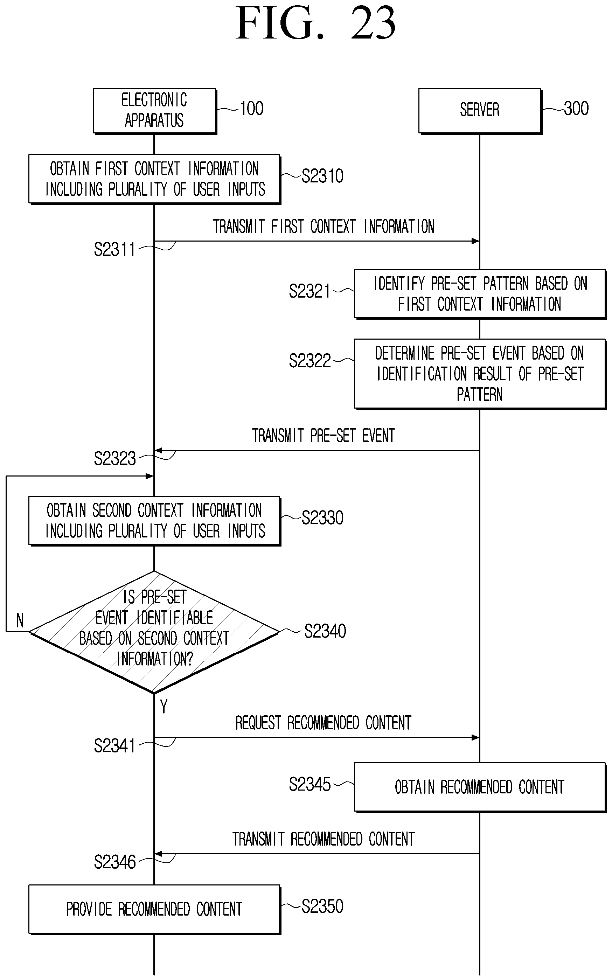

Steps S2210, S2211, S2221, S2222, S2223, S2230, S2231, and S2240 in FIG. 22 correspond to steps S2310, S2311, S2321, S2322, S2323, S2330, S2331, and S2340 in FIG. 23. Accordingly, redundant descriptions thereof will be omitted.

If the predetermined event is identified based on the second context information, the server 300 may obtain address information of the recommended content (S2245). The address information of the recommended content may include an internet address to which data of the recommended content may be received. The server 300 may transmit the address information of the recommended content to the electronic apparatus 100 (S2246).

The electronic apparatus 100 may receive the address information of the recommended content from the server 300. The electronic apparatus 100 may request the recommended content to the content providing server 400 based on the address information (S2247). The electronic apparatus 100 may transmit a signal requesting for the recommended content to the content providing server 400 based on the address information.

The content providing server 400 may receive the recommended content request from the electronic apparatus 100. The content providing server 400 may obtain the recommended content corresponding to the address information in response to the request (S2248). The content providing server 400 may transmit the recommended content to the electronic apparatus 100 (S2249).

The electronic apparatus 100 may receive the recommended content from the content providing server 400. The electronic apparatus 100 may provide the received recommended content (S2250).

FIG. 23 is a flowchart illustrating an operation between the electronic apparatus 100 and the server 300.

Steps S2310, S2311, S2321, S2322, S2330, S2345, S2346, and S2350 in FIG. 23 correspond to steps S2110, S2111, S2121, S2122, S2130, S2145, S2146, and S2150 in FIG. 21. Accordingly, redundant descriptions thereof will be omitted.

After the predetermined event is determined, the server 300 may transmit the predetermined event to the electronic apparatus 100 (S2323).

The electronic apparatus 100 may receive the predetermined event from the server 300. The electronic apparatus 100 may obtain the second context information including the plurality of user inputs. The electronic apparatus 100 may determine whether the predetermined event is identifiable based on the second context information (S2340).

If the predetermined event is not identified based on the second context information (S2340-N), the electronic apparatus 100 may repeatedly perform steps S2330 and S2340.

If the predetermined event is identified based on the second context information (S2340-Y), the electronic apparatus 100 may request the recommended content to the server (S2341).

The server 300 may receive the recommended content request from the electronic apparatus 100. Then, steps S2345, S2346, and S2350 may be performed.

FIG. 24 is a diagram illustrating a plurality of modules used in an operation for providing recommended content.

The electronic apparatus 100 or the server 300 may include a pattern extracting module 10, a matching module 20, and a content extracting module 30.

Respective modules may be disposed in different machines. For example, the pattern extracting module 10 may be present in the electronic apparatus 100, and the matching module 20 and the content extracting module 30 may be present in the server 300.

The pattern extracting module 10 may be a module that extracts a specific pattern associated with the user action based on the context information.

The pattern extracting module 10 may include a use history collecting part 11, a search pattern extracting part 12, an event determining part 13, a pattern and event storing part 14, and an artificial intelligence model 15.

The use history collecting part 11 may collect all actions of the user using a terminal apparatus. The use history collecting part 11 may obtain context information. The context information may include record data of the user having used the terminal apparatus.

The record data may include at least one from among viewing time associated with the terminal apparatus, a use record of the terminal apparatus, a use record of the external machine connected with the terminal apparatus, game time executed from the terminal apparatus, a VoD viewing history, a use record of the remote control apparatus 200 corresponding to the terminal apparatus, a use record of voice recognition, and a service switching period.

The terminal apparatus may be the electronic apparatus 100 displaying content.

The use history collecting part 11 may collect or process record data for extracting a use pattern of the terminal apparatus or a user action pattern. The record data may be described as context information.

The use history collecting part 11 may transmit the record data to the search pattern extracting part 12.

The search pattern extracting part 12 may receive the record data from the use history collecting part 11. The search pattern extracting part 12 may extract a specific pattern corresponding to a device identification information or a user account information based on the record data collected from the use history collecting part 11. The search pattern extracting part 12 may determine whether the record data (or context information) includes the pre-set pattern.

The pre-set pattern may be pre-defined by the user. The pre-set pattern may be pre-categorized. Detailed descriptions associated therewith are described with reference to FIG. 7.

The pre-set pattern may be automatically extracted based on the context information. The pre-set pattern may be determined based on an action pattern that is repeated in various user actions included in the context information.

The search pattern extracting part 12 may transmit at least one from among the record data or result information identifying the pre-set pattern to the event determining part 13.

The event determining part 13 may receive result information identifying the pre-set pattern from the search pattern extracting part 12. The search pattern extracting part 12 may determine a specific event according to the result information.

The event determining part 13 may include a label data generating part 13-1, a feature data generating part 13-2, and a model learning part 13-3.

The label data generating part 13-1 may generate the label data based on the result information identifying the pre-set pattern. The label data may include information on an identification likelihood of the pre-set pattern according to the machine or the user account. Detailed descriptions associated therewith are described with reference to FIG. 9 to FIG. 11.

The feature data generating part 13-2 may select data to be used in the artificial intelligence model from among the record data. The selected data may be described as the feature data. The feature data may be used in training the artificial intelligence model. The feature data may be data in which the record data is changed to correspond to the artificial intelligence model.

The feature data generating part 13-2 may generate context data optimized for inferring a time-point to provide the recommended content. The optimized context data may be described as the feature data.

The feature data may include at least one from among a channel viewing time from the terminal apparatus, an application execution time, a HDMI use time, a display time of a main screen, a game execution time, and state information.

State information may include at least one from among illuminance information, a booting time, and an average use time.

The feature data may be time series data or summary data. The feature data may be generated based on a pre-set period. The pre-set period may be at least one from among a daily, a weekly, a monthly, a yearly unit.

The model learning part 13-3 may train the artificial intelligence model 15 based on the label data generated from the label data generating part 13-1 and the feature data generated from the feature data generating part 13-2.

The model learning part 13-3 may generate (or update) the artificial intelligence model 15 by performing learning (or training) based on the label data and/or the feature data. The model learning part 13-3 may utilize a machine learning algorithm such as LSTM, Random Forest, and decision tree or an algorithm of a deep learning neural network structure. The model learning part 13-3 may reduce data distribution by using weight values.

The event determining part 13 which includes the model learning part 13-3 may determine the predetermined event which can specify a suitable time-point in providing the recommended content.

The event determining part 13 which includes the model learning part 13-3 may generate or update the artificial intelligence model 15 for determining the predetermined event which can specify the suitable time-point in providing the recommended content.

The event determining part 13 may finally generate or update the artificial intelligence model 15 through a learning operation. The event determining part 13 may transmit the learning result to the pattern and event storing part 14. The learning result may include the predetermined event.

The pattern and event storing part 14 may store the learning result received through the event determining part 13. The pattern and event storing part 14 may store the pre-set pattern identified from the record data and/or the predetermined event for specifying the time-point for providing the recommended content.

The pattern and event storing part 14 may transmit the pre-set pattern and/or the predetermined event being stored to the artificial intelligence model 15.

The artificial intelligence model 15 may be generated or updated based on the pre-set pattern and/or the predetermined event received through the pattern and event storing part 14.

The artificial intelligence model 15 may be generated or updated by a learning operation performed through the event determining part 13.

Detailed descriptions associated with the artificial intelligence model 15 are described with reference to FIG. 15 and FIG. 16.

The matching module 20 may match the context information with the recommended content based on the predetermined event. The matching module 20 may provide the recommended content to the user by identifying whether the predetermined event has occurred based on the context information.

The matching module 20 may include an event matching part 21, a recommended content matching part 22, and a content providing part 23.

The matching module 20 may receive the artificial intelligence model 15 from the pattern extracting module 10.

The matching module 20 may approach (or connect to) the artificial intelligence model 15 included in the pattern extracting module 10.

The event matching part 21 may determine whether the predetermined event is identifiable based on a currently obtain context information (second context information). The event matching part 21 may obtain a probability value indicating a likelihood of the recommended content being needed based on the currently obtain context information. The event matching part 21 may determine whether to provide the recommended content based on the probability value. If it is determined to perform a recommended operation, the event matching part 21 may transmit a control signal to the recommended content matching part 22. The control signal may include a request recommended content command.

The recommended content matching part 22 may receive the recommended content request from the event matching part 21. The recommended content matching part 22 may transmit the recommended content request to the content extracting module 30. The recommended content matching part 22 may receive the recommended content from a content storing part 32 of the content extracting module 30

The content providing part 23 may receive the recommended content from the recommended content matching part 22. The content providing part 23 may provide the received recommended content.

The content providing part 23 may receive the recommended content when the predetermined event is identified and provide to the user. The content providing part 23 may provide the guide screen.

The content providing part 23 may provide a UI which includes a guide text such as "Searching for viewable content?"

The content providing part 23 may provide a UI associated with content as a pop-up screen. The content providing part 23 may provide a UI including an action button which can select (or playback) content.

The electronic apparatus 100 may personalize the guide screen provided by the content providing part 23. Personalization may mean updating the artificial intelligence model 15.

The electronic apparatus 100 may analyze the user input obtained through the guide screen (pop-up screen or recommended screen). The electronic apparatus 100 may use the user input as feedback information. The electronic apparatus 100 may update in the artificial intelligence model 15 based on the feedback information. An update operation performed based on the feedback information may contribute in raising the accuracy of the artificial intelligence model 15.

For example, a content recommendation may be shown by determining that a recommendation is necessary in the electronic apparatus 100. The electronic apparatus 100 may monitor the feedback of users with respect to the relevant recommendations. Monitoring may be checking whether the recommendation was appealed to the user normally and switching to the recommended content or the recommended service was carried out. Information on whether switching is carried out may be used in generating new label data. The electronic apparatus 100 may train the artificial intelligence model 15 by using not only first label data which was previously generated, but also second label data generated based on feedback data.

The content extracting module 30 may be a module which manages at least one content that can be provided as the recommended content.

The content extracting module 30 may include a content extracting part 31 and the content storing part 32.

The content extracting part 31 may obtain the recommended content by machine or the recommended content by user account.

For example, if a user has viewed content which is part of a series and newly updated content in the series is present, the content extracting part 31 may extract the relevant content.

For example, if a newly uploaded content in a preferred genre of the user is present, the content extracting part 31 may extract the relevant content.

For example, the content extracting part 31 may extract content that is popularly viewed in real-time by multiple users.

The extracted content may include streaming content provided from a specific website.

The content storing part 32 may store the content extracted from the content extracting part 31.

The content storing part 32 may receive the recommended content request from the recommended content matching part 22. The content storing part 32 may transmit the recommended content to the recommended content matching part 22 in response to the request.

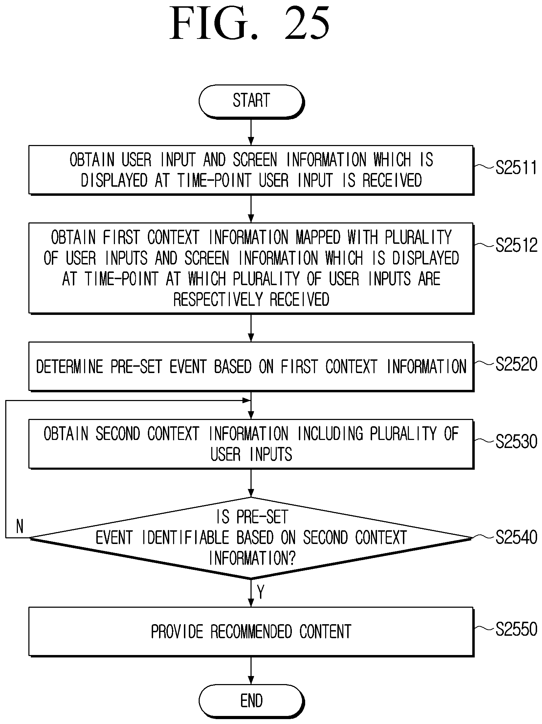

FIG. 25 is a flowchart illustrating mapping information.

Steps S2520, S2530, S2540, and S2550 in FIG. 25 correspond to steps S520, S530, S540, and S550 in FIG. 5. Accordingly, redundant descriptions thereof will be omitted.

The electronic apparatus 100 may obtain a user input and screen information which is displayed at a time-point the user input is received (S2511).

The electronic apparatus 100 may receive a plurality of user inputs. Every time a user input is received, the electronic apparatus 100 may obtain the user input and the screen information. The electronic apparatus 100 may map the user input and the screen information corresponding to the user input.

The electronic apparatus 100 may obtain the first context information mapped with the plurality of user inputs and the screen information displayed at the time-point the respective user inputs are received.

It may be assumed that a first user input is received at the first time-point, and that a specific screen is provided based on first screen information at the first time-point. The electronic apparatus 100 may obtain the first user input and first screen information obtained at the first time-point.

It may be assumed that a second user input is received at a second time-point, and that a specific screen is provided based on second screen information at the second time-point. The electronic apparatus 100 may obtain the second user input and second screen information obtained at the second time-point.

The electronic apparatus 100 may obtain first mapping information which combined the first user input and the first screen information, and second mapping information which combined the second user input and the second screen information as the first context information. The first context information may include the first mapping information and the second mapping information.

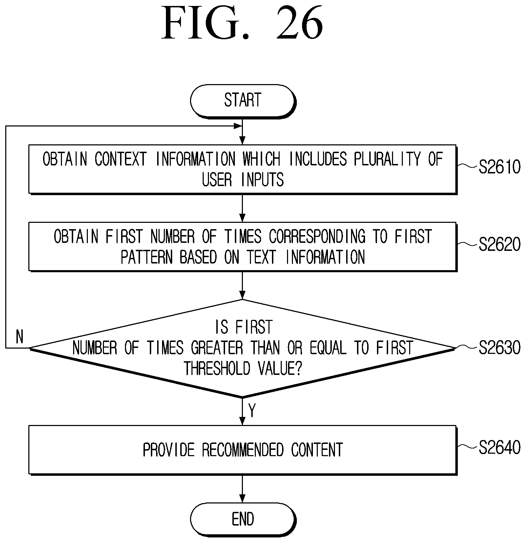

FIG. 26 is a flowchart illustrating an operation for providing recommended content.

Referring to FIG. 26, the electronic apparatus 100 may obtain context information which includes a plurality of user inputs (S2610).

The electronic apparatus 100 may obtain the first number of times corresponding to the first pattern based on the context information (S2620). The first pattern may be a pre-set pattern or a predetermined event indicating a time-point determined as suitable for the user to receive the recommended content.

The electronic apparatus 100 may determine whether the first number of times is greater than or equal to the first threshold value (S2630). If the first number of times is less than the first threshold value (S2630-N), the electronic apparatus 100 may repeatedly perform steps S2610 and S2620.

If the first number of times is greater than or equal to the first threshold value (S2630-Y), the electronic apparatus 100 may provide the recommended content (S2640).

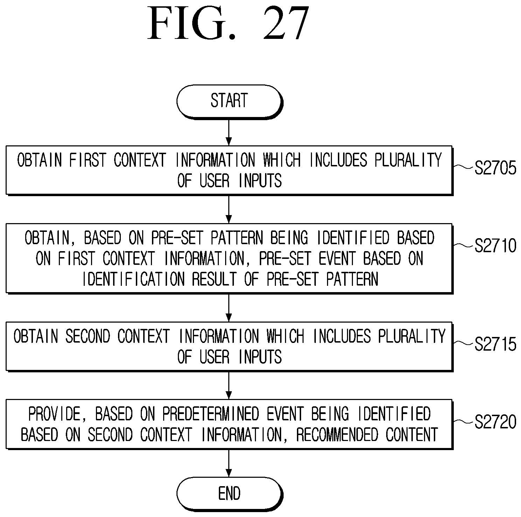

FIG. 27 is a flowchart illustrating a controlling method of the electronic apparatus 100.

Referring to FIG. 27, the controlling method of the electronic apparatus 100 which stores the pre-set pattern and the recommended content may include obtaining the first context information which includes the plurality of user inputs (S2705), obtaining, based on the pre-set pattern being identified according to the first context information, the predetermined event based on the identification result of the pre-set pattern (S2710), obtaining the second context information which includes the plurality of user inputs (S2715), and providing, based on the predetermined event being identified according to the second context information, the recommended content (S2720).

The pre-set pattern may include at least one from among the pattern associated with the key input of the remote control apparatus 200 connected with the electronic apparatus 100, the pattern associated with the channel switching input, the pattern associated with the application switching input, and the pattern associated with the source switching input connected with the electronic apparatus 100.

The obtaining the predetermined event may include identifying at least one user input indicating the time-point to provide the recommended content from among the plurality of user inputs included in the first context information, and obtaining the predetermined event based on the identified at least one user input.

The pre-set pattern may include the first pattern and the second pattern, and the obtaining the predetermined event may include obtaining the first number of times that the first pattern is identified during the threshold time based on the first context information, obtaining the second number of times that the second pattern is identified during the threshold time based on the first context information, and obtaining the predetermined event based on the first number of times and the second number of times.

The obtaining the predetermined event may include obtaining, based on the first number of times being greater than or equal to the first threshold value which corresponds to the first pattern, the first median value based on the pre-set value and the first weight value corresponding to the first pattern, obtaining, based on the second number of times being greater than or equal to the second threshold value which corresponds to the second pattern, the second median value based on the pre-set value and the second weight value corresponding to the second pattern, obtaining the sum value of having added the first median value and the second median value, and obtaining, based on the sum value being greater than or equal to a third threshold value, the predetermined event based on the first context information.

The obtaining the predetermined event may include obtaining, based on the sum value being greater than or equal to the third threshold value, the feature data and the label data based on the first context information, and determining the predetermined event based on the feature data and the label data.

The controlling method may further include obtaining, based on the second context information being obtained, the third number of times that the first pattern is identified during the threshold time based on the second context information, obtaining the fourth number of times that the second pattern is identified during the threshold time based on the second context information, updating the first threshold value based on the third number of times, updating the second threshold value based on the fourth number of times, and updating the predetermined event based on the updated first threshold value and the updated second threshold value.

The controlling method may further include providing, based on the predetermined event being identified according to the second context information, the guide screen associated with the recommended content and updating, based on the user feedback being received through the guide screen, the predetermined event based on the user feedback.

The guide screen may include a user interface (UI) for deleting the predetermined event, and the updating the predetermined event may include deleting, based on the user feedback being received through the UI for deleting the predetermined event, the predetermined event.

The controlling method may further include generating, based on the pre-set pattern being identified according to the first context information, the artificial intelligence model for determining the predetermined event based on the identification result of the pre-set pattern, inputting the second context information in the artificial intelligence model, obtaining the probability value indicating whether the predetermined event is identifiable as the output data based on the second context information through the artificial intelligence model, and providing, based on the probability value being greater than or equal to a fourth threshold value, the recommended content.

The controlling method of the electronic apparatus 100 as shown in FIG. 27 may be executed on the electronic apparatus 100 having the configurations of FIG. 2 or FIG. 3, and may also be executed on the electronic apparatus 100 having configurations in addition thereto.

Methods according to the various embodiments of the disclosure described above may be implemented in an application form installable in an electronic apparatus of the related art.

The methods according to the various embodiments of the disclosure described above may be implemented with only a software upgrade, or a hardware upgrade of the electronic apparatus of the related art.

The various embodiments of the disclosure described above may be performed through an embedded server provided in the electronic apparatus, or at least one external server of the electronic apparatus or the display apparatus.

The various embodiments described above may be implemented with software including instructions stored in a machine-readable storage media (e.g., computer). The machine may call an instruction stored in the storage medium, and as an apparatus operable according to the called instruction, may include the electronic apparatus according to the above-mentioned embodiments. Based on a command being executed by the processor, the processor may directly or using other elements under the control of the processor perform a function corresponding to the command. The command may include a code generated by a compiler or executed by an interpreter. The machine-readable storage medium may be provided in the form of a non-transitory storage medium. Herein, 'non-transitory' merely means that the storage medium is tangible and does not include a signal, and the term does not differentiate data being semi-permanently stored or being temporarily stored in the storage medium.

A method according to the various embodiments described above may be implemented as a computer program product. The computer program product may be exchanged between a seller and a purchaser as a commodity. The computer program product may be distributed in the form of a machine-readable storage medium (e.g., a compact disc read only memory (CD-ROM)), or distributed online through an application store (e.g., PLAYSTORE^{™}). In the case of online distribution, at least a portion of the computer program product may be stored at least temporarily in the storage medium such as a server of a manufacturer, a server of an application store, or a memory of a relay server, or temporarily generated.

Each of the elements (e.g., a module or a program) according to the various embodiments described above may be formed as a single entity or a plurality of entities, and some sub-elements from among the above-mentioned sub-elements may be omitted, or other sub-elements may be further included in the various embodiments. Alternatively or additionally, some elements (e.g., modules or programs) may be integrated into one entity to perform the same or similar functions performed by the respective relevant elements prior to integration. Operations performed by a module, a program, or another element, in accordance with various embodiments, may be executed sequentially, in a parallel, repetitively, or in a heuristic manner, or at least some operations may be executed in a different order, omitted or a different operation may be added.

While the disclosure has been illustrated and described with reference to various example embodiments thereof, it will be understood that the various example embodiments are intended to be illustrative, not limiting. It will be understood by those skilled in the art that various changes in form and details may be made therein without departing from the scope of the invention, as defined by the claims.

## Claims

1. An electronic apparatus, comprising:
a memory storing a pre-set pattern and recommended content; and
at least one processor,
wherein the at least one processor is configured to:
obtain first context information which comprises a plurality of user inputs, obtain, based on the pre-set pattern being identified according to the first context information, a predetermined event based on an identification result of the pre-set pattern,
obtain second context information which comprises a plurality of user inputs, and
provide, based on the predetermined event being identified according to the second context information, the recommended content.

2. The electronic apparatus of claim 1, wherein the pre-set pattern comprises:
at least one from among a pattern associated with a key input of a remote control apparatus connected with the electronic apparatus, a pattern associated with a channel switching input, a pattern associated with an application switching input, and a pattern associated with a source switching input connected with the electronic apparatus.

3. The electronic apparatus of claim 1, wherein the at least one processor is configured to:
identify at least one user input indicating a time-point to provide the recommended content from among the plurality of user inputs comprised in the first context information, and
obtain the predetermined event based on the identified at least one user input.

4. The electronic apparatus of claim 1, wherein the pre-set pattern comprises a first pattern and a second pattern, and
the at least one processor is configured to:
obtain a first number of times that the first pattern is identified during a threshold time based on the first context information,
obtain a second number of times that the second pattern is identified during the threshold time based on the first context information, and
obtain the predetermined event based on the first number of times and the second number of times.

5. The electronic apparatus of claim 4, wherein the at least one processor is configured to:
obtain, based on the first number of times being greater than or equal to a first threshold value which corresponds to the first pattern, a first median value based on a pre-set value and a first weight value corresponding to the first pattern,
obtain, based on the second number of times being greater than or equal to a second threshold value which corresponds to the second pattern, a second median value based on the pre-set value and a second weight value corresponding to the second pattern,
obtain a sum value of having added the first median value and the second median value, and
obtain, based on the sum value being greater than or equal to a third threshold value, the predetermined event based on the first context information.

6. The electronic apparatus of claim 5, wherein the at least one processor is configured to:
obtain, based on the sum value being greater than or equal to the third threshold value, feature data and label data based on the first context information, and
determine a predetermined event based on the feature data and the label data.

7. The electronic apparatus of claim 5, wherein the at least one processor is configured to:
obtain, based on the second context information being obtained, a third number of times that the first pattern is identified during the threshold time based on the second context information,
obtain a fourth number of times that the second pattern is identified during the threshold time based on the second context information,
update the first threshold value based on the third number of times,
update the second threshold value based on the fourth number of times, and
update the predetermined event based on the updated first threshold value and the updated second threshold value.

8. The electronic apparatus of claim 1, wherein the at least one processor is configured to:
provide, based on the predetermined event being identified according to the second context information, a guide screen associated with the recommended content, and
update, based on user feedback being received through the guide screen, the predetermined event based on the user feedback.

9. The electronic apparatus of claim 8, wherein the guide screen comprises a user interface (UI) for deleting the predetermined event, and
the at least one processor is configured to:
delete, based on the user feedback being received through the UI for deleting the predetermined event, the predetermined event.

10. The electronic apparatus of claim 1, wherein the at least one processor is configured to:
generate, based on a pre-set pattern being identified according to the first context information, an artificial intelligence model for determining the predetermined event based on the identification result of the pre-set pattern,
input the second context information in the artificial intelligence model,
obtain a probability value indicating whether the predetermined event is identifiable as output data based on the second context information through the artificial intelligence model, and
provide, based on the probability value being greater than or equal to a fourth threshold value, the recommended content.

11. A controlling method of an electronic apparatus storing a pre-set pattern and a recommended content, the method comprising:
obtaining first context information which comprises a plurality of user inputs;
obtaining, based on the pre-set pattern being identified according to the first context information, a predetermined event based on an identification result of the pre-set pattern;
obtaining second context information which comprises a plurality of user inputs; and
providing, based on the predetermined event being identified according to the second context information, the recommended content.

12. The method of claim 11, wherein the pre-set pattern comprises:
at least one from among a pattern associated with a key input of a remote control apparatus connected with the electronic apparatus, a pattern associated with a channel switching input, a pattern associated with an application switching input, and a pattern associated with a source switching input connected with the electronic apparatus.

13. The method of claim 11, wherein obtaining a predetermined event comprises:
identifying at least one user input indicating a time-point to provide the recommended content from among the plurality of user inputs comprised in the first context information, and
obtaining the predetermined event based on the identified at least one user input.

14. The method of claim 11, wherein the pre-set pattern comprises:
a first pattern and a second pattern, and
obtaining a predetermined event comprises:
obtaining a first number of times that the first pattern is identified during a threshold time based on the first context information,
obtaining a second number of times that the second pattern is identified during the threshold time based on the first context information, and
obtaining the predetermined event based on the first number of times and the second number of times.

15. The method of claim 14, wherein obtaining a predetermined event comprises:
obtaining, based on the first number of times being greater than or equal to a first threshold value which corresponds to the first pattern, a first median value based on a pre-set value and a first weight value corresponding to the first pattern,
obtaining, based on the second number of times being greater than or equal to a second threshold value which corresponds to the second pattern, a second median value based on the pre-set value and a second weight value corresponding to the second pattern,
obtaining a sum value of having added the first median value and the second median value, and
obtaining, based on the sum value being greater than or equal to a third threshold value, the predetermined event based on the first context information.
